# EUROPÄISCHE PATENTSCHRIFT

(11) **EP 3 419 918 B1**
(45) Veröffentlichungstag und Bekanntmachung des Hinweises auf die Patenterteilung: **27.10.2021**
(21) Anmeldenummer: 17716109.8
(22) Anmeldetag: 27.02.2017
(51) Int. Cl.: B65G 1/04, B66F 9/07

(54) **REGALBEDIENGERÄT FÜR EINEN PARALLELEN BETRIEB EINES HOCHREGALLAGERS SOWIE EIN BETRIEBSVERFAHREN HIERFÜR**
STORAGE AND RETRIEVAL DEVICE FOR PARALLEL OPERATION OF A HIGH-BAY WAREHOUSE AND OPERATING METHOD THEREFOR
TRANSSTOCKEUR DESTINÉ AU FONCTIONNEMENT PARALLÈLE D'UN MAGASIN À RAYONNAGES EN HAUTEUR ET PROCÉDÉ DE FONCTIONNEMENT ASSOCIÉ

(30) Priorität: 26.02.2016 DE 102016203134; 25.04.2016 DE 102016206962; 27.04.2016 DE 102016207126; 22.09.2016 DE 102016117941
(43) Veröffentlichungstag der Anmeldung: 02.01.2019
(73) Patentinhaber: Baumüller Nürnberg GmbH, 90482 Nürnberg (DE)
(72) Erfinder: GÖTZ, Fritz Rainer, 73230 Kirchheim unter Teck (DE)
(74) Vertreter: Heilein, Ernst-Peter
(86) Internationale Anmeldenummer: PCT/DE2017/100154
(87) Internationale Veröffentlichungsnummer: WO 2017/144054

(56) Entgegenhaltungen:
- WO-A1-2004/074602
- DE-C- 957 200
- JP-A- S5 327 971
- US-A- 2 837 224

## Beschreibung

Die Erfindung betrifft ein Regalbediengerät, insbesondere für einen parallelen Betrieb eines Hochregallagers, sowie ein Betriebsverfahren hierfür.

Zur Zwischenlagerung, zum Vorhalten und/oder zum Kommissionieren von bestimmten Gütern finden verbreitet Hochregallager Verwendung, die Lagergerüste mit entlang einer ersten Horizontalrichtung ausgerichteten Stirnseiten aufweisen. Ein jedes Lagergerüst umfasst eine Anzahl von Lagerfächern, die in drei Raumdimensionen, also dreidimensional, matrixförmig angeordnet sind und jeweils einen Lagerplatz bereitstellen, beispielsweise für auf einer Europalette abgelegtes Lagergut oder für einen Container. Die Längsseiten der einzelnen Lagergerüste sind zweckmäßigerweise aufeinander zu gerichtet und können zwischen benachbarten Lagergerüsten eine in einer zweiten Horizontalrichtung ausgerichteten Lagergasse begrenzen. Über solche Lagergassen ist es ermöglicht, bestimmte Lagerfächer zu erreichen, beispielsweise mittels eines Hubstaplers und/oder Gabelstaplers.

Zur Reduzierung von Personalaufwand werden zunehmend an Stelle von manuell betätigten Hub- oder Gabelstaplern automatisierte Förderfahrzeug-Hebevorrichtungen verwendet, welche innerhalb einer Lagergasse positioniert werden.

Die aus dem Stand der Technik bekannten Förderfahrzeug-Hebevorrichtungen weisen üblicherweise drei Bewegungsfreiheitsgrade auf, nämlich einen Ersten, durch Verfahren des Förderfahrzeugs entlang der Lagergasse, konventionsgemäß als x-Achse bezeichnet, einen Zweiten, durch Heben und Senken einer Hebevorrichtung, als y-Achse bezeichnet, und schließlich einen Dritten, bestehend in einer Bewegung in eine Horizontalrichtung senkrecht zu den beiden anderen Richtungen, insbesondere durch einen Teleskopantrieb, welche gewöhnlich als z-Achse bezeichnet wird und welche die Bewegung beim Be- bzw. Entladen der Lagerfächer beschreibt. Dieser konventionellen Nomenklatur wird auch im vorliegenden Text gefolgt.

Aus den Druckschriften DE 10 2013 114 275 A1 und US 2005/0095095 A1 beispielsweise ist eine Förderfahrzeug-Hebevorrichtung bekannt, die einen über die vollständige Höhe des Lagergerüsts reichenden Vertikalträger aufweist, der in der zweiten Horizontalrichtung entlang des Lagergerüsts verfahrbar ist. An dem Vertikalträger ist mittels eines teleskopierbaren Antriebs ein Hubtisch angebunden, der über die vollständige Vertikalrichtung des Vertikalträgers verfahrbar ist.

Ein daraus oder beispielsweise aus der DE 196 34 216 A1 bekannter teleskopierbarer Antrieb umfasst meist einen an dem Vertikalträger angebundenen Elektromotor, der Rollen oder eine Kette antreibt. Diese stehen in Wirkverbindung mit dem Hubtisch, sodass dieser senkrecht zur Lagergasse und senkrecht zur Vertikalrichtung, also in die erste Horizontalrichtung, bewegt werden kann. Infolgedessen ist es ermöglicht, mittels des Hubtisches im Wesentlichen jedes Lagerfach des Lagergerüsts anzufahren und mittels einer geeigneten Vorrichtung des Hubtisches ein Lagergut aus dem Lagergerüst zu entnehmen bzw. dort zu deponieren.

Sofern mittels des Hochregallagers eine vergleichsweise große Anzahl an Lagerfächern bereitgestellt werden soll, ist es erforderlich, dass das Lagergerüst sowie der Vertikalträger der Förderfahrzeug-Hebeeinrichtung eine vergleichsweise große Größe aufweisen, was eine vergleichsweise große Masse bedingt. Hierbei ist eine vergleichsweise aufwändige Führung des schweren Vertikalträgers erforderlich. Um ein vergleichsweise schnelles Bedienen der Lagerfächer zu ermöglichen, ist eine vergleichsweise hohe Dynamik des Vertikalträgers und des Hubtisches erforderlich. Aufgrund der hohen Masse des Vertikalträgers ist hierfür ein leistungsstarker Antrieb erforderlich. Nachteilig ferner ist, dass die bekannte Förderfahrzeug-Hebeeinrichtung stets nur ein einziges Lagerfach anzufahren vermag, weswegen die pro Zeiteinheit maximal ein- bzw. auslagerbare Anzahl an Lagergütern begrenzt ist.

Zur Vermeidung dessen wurde in der DE 957 200 B eine Speicher-Einrichtung für beliebige Güter, z.B. gleichartige Einzelgüter usw., insbesondere für Kraftfahrzeuge vorgeschlagen, die aus mindestens einem neben- und übereinander angeordneten waben- oder gitterartig ausgebildeten, zellenenthaltenden Abschnitt besteht, dem mindestens an einer Seite, an welcher die Zellen zugänglich sind, eine aus mehreren, jeweils mit eigenem Antrieb für mehrere Fahrtrichtungen, insbesondere für vertikale und horizontale Richtung, ausgerüsteten Förderkörben od. dgl. bestehende Einrichtung zugeordnet ist. Dabei sind die Förderkörbe selbständig in mehreren Richtungen verschiebbar, derart, dass ein Förderkorb einen anderen auf Umwegen in der Förderebene umfahren kann und somit das Ein- und Ausbringen der Güter in bzw. aus beliebig wählbaren Zellen auf verschiedenen, jeweils wählbaren Zu- und Abförderbahnen durchführbar ist.

Auch die DE 36 41 671 A1 offenbart ein Lagersystem mit Hochregallager und Fördereinrichtungen mit waagerechten Förderschienen in jeder Etage, eine Beschickungs- und Entnahmeeinrichtung sowie gegebenenfalls eine hieran ankoppelbare Steuerkabine, die an waagerechten Förderschienen hängt, wobei ein Teilstück der Förderschiene mittels eines Aufzuges senkrecht verschoben werden kann und in Lücken der Förderschienen in den einzelnen Etagen passt.

Schließlich ist in der JP 2013-049515 A ein automatisches Lagersystem vorgeschlagen, welches so konfiguriert ist, dass Lasten in einer Vielzahl von Speicherbereichen gespeichert werden, die durch vertikal verlaufende Stützen und horizontal verlaufende Balken gebildet werden, wobei die Lasten in eine Vielzahl von Speicherbereichen geladen und entladen werden können. Das automatisierte Lagersystem umfasst: vertikale Führungsschienen, die an den Stützen angeordnet sind; seitliche Führungsschienen, die an den Balken angeordnet sind; und einen sich bewegenden Lastwagen. Der Lastwagen weist einen Rahmenkörper auf, der die gleiche rechteckige Form wie mindestens eines der Speicherbereiche aufweist sowie vertikale Rahmen und Seitenrahmen, an welchen Führungsrollen entweder auf den vertikalen Rahmen angeordnet sind und mit den vertikalen Führungsschienen in Eingriff stehen oder am Seitenrahmen angeordnet sind und in Eingriff mit den seitlichen Führungsschienen stehen.

Die Anordnung von Führungsschienen direkt an den Seiten der Hochregallager, in welchen die Lagergasse überbrückende Förderkörbe bzw. Lastwägen geführt werden sollen, berücksichtigt unzureichend, dass Hochregallager für gewöhnlich keine ideal-starren Gebilde darstellen, sondern beispielsweise aufgrund von Temperaturschwankungen und/oder mechanischen Einwirkungen in Bewegung, insbesondere zu Schwankungen, neigen können, was die zuverlässige Führung solcher Förderkörbe bzw. Lastwägen einschränkt. Deshalb haben in der Praxis solche Systeme bislang keine Verbreitung gefunden.

Hiervon ausgehend liegt der vorliegenden Erfindung die Aufgabe zugrunde, ein neuartiges und gegenüber den Stand der Technik verbessertes Regalbediengerät, insbesondere für einen parallelen Betrieb eines Hochregallagers, anzugeben, wobei insbesondere ein schneller Zugriff sowie durch den bevorzugten parallelen Betrieb ein hoher Umschlag von Lagergütern ermöglicht sein soll.

Hinsichtlich des Regalbediengeräts wird diese Aufgabe durch die Merkmale des Anspruchs 1 und hinsichtlich eines diesbezüglichen Betriebsverfahrens durch die Merkmale des Anspruchs 14 erfindungsgemäß gelöst. Vorteilhafte Weiterbildungen und Ausgestaltungen, welche jeweils einzeln oder in Kombination miteinander einsetzbar sind, sind Gegenstand der jeweiligen Unteransprüche.

Ein erfindungsgemäßes Regalbediengerät zeichnet sich zunächst durch ein Gerätegerüst aus, das zu einer dreidimensionalen Fächermatrix angeordnete Gerüstfächer aufweist.

Das erfindungsgemäße Regalbediengerät zeichnet sich darüber hinaus durch mindestens eine zur Aufnahme eines Lagerguts dienenden Kabine aus, die elektromotorisch angetrieben innerhalb der dreidimensionalen Fächermatrix von jedem Gerüstfach aus in eine Vertikalrichtung und/oder in eine zweite Horizontalrichtung verfahrbewegbar ist. Das erfindungsgemäße Regalbediengerät ermöglicht, durch die Verfahrbewegbarkeit wenigstens einer Kabine innerhalb eines Gerätegerüsts des Regalbediengeräts in eine Vertikalrichtung und/oder in eine zweite Horizontalrichtung, vorteilhaft einen schnellen Zugriff, sowie durch einen parallelen Betrieb mehrerer Kabinen einen hohen Umschlag von Lagergütern beim Betrieb eines Hochregallagers.

In einer ersten bevorzugten Ausgestaltung ist die Kabine innerhalb der dreidimensionalen Fächermatrix von jedem Gerüstfach aus in eine Vertikalrichtung und von wenigstens einer in zweiter Horizontalrichtung nebeneinander angeordneten Reihe von Gerüstfächem aus in eine zweite Horizontalrichtung verfahrbewegbar. Durch die Reduzierung der Anzahl von Gerüstfächern, von welchen aus die Kabine in zwei Richtungen, nämlich in eine Vertikalrichtung und in eine zweite Horizontalrichtung verfahrbewegbar ist, können vorteilhaft insbesondere erste elektromotorische Antriebe, bei annähernd gleich schneller Erreichbarkeit der einzelnen Gerüstfächer durch die Kabine und damit annähernd gleicher Flexibilität in der Bedienung des Regalbediengeräts, eingespart werden.

Eine derartige "Rasterung", also die Abfolge der Reihen an Gerüstfächern, von denen aus die Kabine entweder nur in eine Vertikalrichtung oder in zwei Richtungen, nämlich in die Vertikalrichtung und in eine zweite Horizontalrichtung verfahrbar ist, kann insbesondere je nach Kundenwunsch, vorteilhaft variiert werden, wobei die unterste Reihe an Gerüstfächern besonders bevorzugt stets eine der Reihen an Gerüstfächern ist, von denen aus die Kabine in eine Vertikalrichtung und in eine zweite Horizontalrichtung verfahrbar ist. Zudem ist es von Vorteil, wenn an dieser Reihe an Gerüstfächern wenigstens ein Ladefach zum Be- und/oder Entladen angeordnet ist.

In einer weiteren Ausgestaltung der vorliegenden Erfindung ist bevorzugt, dass von Gerätegerüst und Kabine, das eine wenigstens eine, vorzugsweise wenigstens zwei, insbesondere aktiv ausgebildete, in der zweiten Horizontalrichtung verlaufende horizontale Antriebsbahnen, und wenigstens eine, vorzugsweise wenigstens zwei, insbesondere aktiv ausgebildete, in der Vertikalrichtung verlaufende vertikale Antriebsbahnen aufweist und das andere eine dazu korrespondierende Anzahl von, insbesondere passiv ausgebildeten, in der zweiten Horizontalrichtung verlaufende horizontale Antriebsbahnen, und eine ebenfalls korrespondierende Anzahl von passiv ausgebildeten, in der Vertikalrichtung verlaufende vertikale Antriebsbahnen aufweist, oder umgekehrt.

Dabei umfassen, erfindungsgemäß bevorzugt, aktiv ausgebildete Antriebsbahnen, vorzugsweise ein jeder durch ein Gerüstfach begrenzte Abschnitt der aktiv ausgebildeten Antriebsbahnen, wenigstens einen elektromotorisch angetriebenen Zahnriemen, und passiv ausgebildete Antriebsbahnen, vorzugsweise ein jeder an einer Kabine ausgebildete Abschnitt der passiv ausgebildeten Antriebsbahnen, wenigstens eine Zahnstange zur Wechselwirkung mit wenigstens einem der Zahnriemen. Die zueinander korrespondierende Anordnung aktiver und passiver Antriebsbahnen am Gerätegerüst und an der Kabine kann vorteilhaft eine Kraftübertragung von den aktiv ausgebildeten Antriebsbahnen ermöglichen. Insbesondere die Wechselwirkung der elektromotorisch angetriebenen Zahnriemen aktiv ausgebildeter Antriebsbahnen mit den Zahnstangen passiv ausgebildeter Antriebsbahnen kann vorteilhaft zu einer Verfahrbewegung der Kabine im Gerätegerüst führen. Die Variante, in der die Kabine wenigstens eine, vorzugsweise wenigstens zwei, insbesondere aktiv ausgebildete, in der zweiten Horizontalrichtung verlaufende horizontale Antriebsbahnen, und wenigstens eine, vorzugsweise wenigstens zwei, insbesondere aktiv ausgebildete, in der Vertikalrichtung verlaufende vertikale Antriebsbahnen aufweist, bietet zudem den Vorteil, dass elektromotorische Antriebe gegenüber der anderen Variante, in welcher das Gerätegerüst aktiv ausgebildete Antriebsbahnen aufweist, eingespart werden können. Insbesondere beim Wechseln zwischen den einzelnen Gerüstfächern, wenn die Kabine teilweise die mechanische Führung durch die Führungsbahnen zeitweilig verlässt, können zudem jeweils zwei zueinander parallel am Gerätegerüst angeordnete, horizontale und/oder vertikale Antriebsbahnen eine bessere Abstützung und damit eine sicherere Verfahrbewegung der Kabine gewährleisten.

Zweckmäßiger Weise kann eine jede aktiv ausgebildete horizontale Antriebsbahn, vorzugsweise ein jeder durch ein Gerüstfach begrenzte Abschnitt der aktiv ausgebildeten Antriebsbahnen, unmittelbar oder mittelbar mit wenigstens einem ersten elektromotorischen Antrieb zum Verfahrbewegen der Kabine in die zweite Horizontalrichtung und eine jede aktiv ausgebildete vertikale Antriebsbahn, vorzugsweise ein jeder durch ein Gerüstfach begrenzte Abschnitt der aktiv ausgebildeten Antriebsbahnen, unmittelbar oder mittelbar mit wenigstens einem zweiten elektromotorischen Antrieb zum Verfahrbewegen der Kabine in die Vertikalrichtung wirkverbunden sein; wobei ein jeder elektromotorische Antrieb bevorzugt insbesondere ein Servo-Antrieb sein kann. Die mit den aktiv ausgebildeten horizontalen und/oder vertikalen Antriebsbahnen unmittelbar oder mittelbar wirkverbundenen elektromotorischen Antriebe stellen vorteilhaft eine Bewegungsenergie zum Antrieb der Verfahrbewegung der Kabine bereit. Besonders vorteilhaft ist es dabei, wenn die elektromotorischen Antriebe Servo-Antriebe sind, da dies die Steuerbarkeit der Verfahrbewegung der Kabine vorteilhaft erleichtert.

In einer weiteren Ausgestaltung der vorliegenden Erfindung ist bevorzugt, dass jeder elektromotorische Antrieb einen außenverzahnten und vorzugsweise auch innenverzahnten, in die jeweilige Antriebsrichtung gespannten, Zahnriemen umfasst; wobei bei einer Verfahrbewegung der Kabine in die zweite Horizontalrichtung die erste Zahnstange einer passiv ausgebildeten, horizontalen Antriebsbahn mit wenigstens einem ersten Zahnriemen einer der aktive ausgebildeten, horizontalen Antriebsbahnen in Eingriff ist und zweite Zahnriemen aktiv ausgebildeter, vertikaler Antriebsbahnen zur zweiten Zahnstange eine horizontale Querverschiebung zulassend ausgerichtet sind; und wobei bei einer Verfahrbewegung der Kabine in die Vertikalrichtung die zweite Zahnstange einer passiv ausgebildeten Antriebsbahn mit wenigstens einem zweiten Zahnriemen einer der aktiv ausgebildeten, vertikalen Antriebsbahnen in Eingriff ist und erste Zahnriemen aktiv ausgebildeter, horizontaler Antriebsbahnen zur ersten Zahnstange eine vertikale Querverschiebung zulassend ausgerichtet sind. Mittels außenverzahnter und vorzugsweise auch innenverzahnter Zahnriemen können die elektromotorischen Antriebe vorteilhaft die von ihnen zum Antrieb der Verfahrbewegung der Kabine bereitgestellte Bewegungsenergie verlustarm auf die Zahnstangen der Kabine, und damit die Kabine selbst, übertragen. Doppeltverzahnte, also außen- und innenverzahnte Zahnriemen gewährleisten dabei, im Zusammenspiel mit, an den elektromotorischen Antrieben zur Kraftübertragung angeordneten, motorseitigen Zahnrädern vorteilhaft eine besonders gute Wirkverbindung zwischen jeweiligem elektromotorischen Antrieb und jeweiligem Zahnriemen und dadurch eine schlupffreie und somit verlustarme Kraftübertragung.

In einer weiteren bevorzugte Ausgestaltung weist das Gerätegerüst eine erste Anzahl von in der zweiten Horizontalrichtung verlaufenden horizontalen Führungsbahnen, und eine zweite Anzahl von in der Vertikalrichtung verlaufende vertikale Führungsbahnen auf, wobei die horizontalen Führungsbahnen in der Vertikalrichtung äquidistant übereinander und/oder in einer ersten Horizontalrichtung, die senkrecht zur zweiten Horizontalrichtung ist, zueinander beabstandet angeordnet sind; wobei die vertikalen Führungsbahnen in der zweiten Horizontalrichtung äquidistant nebeneinander und/oder in einer ersten Horizontalrichtung, die senkrecht zur zweiten Horizontalrichtung ist, zueinander beabstandet angeordnet sind; und wobei die Gerüstfächer des Gerätegerüsts vorzugsweise zumindest teilweise mittels der horizontalen und vertikalen Führungsbahnen gebildet sind. Die Anzahl der durch die horizontalen und vertikalen Führungsbahnen zumindest teilweise gebildeten Gerüstfächer des Gerätegerüsts kann vorteilhaft durch Hinzufügen und/oder Wegnehmen von horizontalen bzw. vertikalen Führungsbahnen an eine Anzahl an Lagerfächern eines Lagergerüsts des Hochregallagers angepasst werden. Mittels der Führungsbahnen kann die Kabine während der Verfahrbewegung vorteilhaft geführt und dadurch selbst bei hohen Geschwindigkeiten und/oder schnellen Richtungswechseln stabil verfahrbewegt werden.

In einer weiteren Ausgestaltung der vorliegenden Erfindung ist bevorzugt, dass die Kabine eine in die zweite Horizontalrichtung verlaufende erste Führungsstange, und eine in die Vertikalrichtung verlaufende zweite Führungsstange umfasst; wobei bei einer Verfahrbewegung der Kabine in die zweite Horizontalrichtung die erste Führungsstange mit einer der ersten horizontalen Führungsbahnen wirkverbunden ist; und wobei bei einer Verfahrbewegung der Kabine in die Vertikalrichtung die zweite Führungsstange mit einer der ersten vertikalen Führungsbahnen wirkverbunden ist. Die Wirkverbindung der Führungsstangen der Kabine mit den Führungsbahnen des Gerätegerüsts kann vorteilhaft ein Verkippen der Kabine innerhalb des Gerätegerüsts vermeiden. Dazu können die beiden Führungsstangen beispielsweise nach Art von Kufen ausgestaltet sein, die entlang der jeweiligen Führungsbahnen gleiten. Zweckmäßigerweise sind die Führungsbahnen hierbei nach Art eines L-Trägers ausgestaltet, und die Führungsstangen liegen beispielsweise formschlüssig an der jeweiligen Führungsbahn an.

In einer weiteren Ausgestaltung der vorliegenden Erfindung ist bevorzugt, dass das Gerätegerüst eine Anzahl von in der zweiten Horizontalrichtung verlaufenden und in der Vertikalrichtung äquidistant übereinander und jeweils zwischen benachbarten ersten horizontalen Führungsbahnen angeordneten horizontalen Antriebsbahnen, und eine Anzahl von in der Vertikalrichtung verlaufenden und in der zweiten Horizontalrichtung äquidistant nebeneinander und jeweils zwischen benachbarten ersten vertikalen Führungsbahnen angeordneten vertikalen Antriebsbahnen aufweist. Die im Gerätegerüst, vorzugsweise regelmäßig, angeordneten Antriebsbahnen können vorteilhaft einen Kraftübertrag und damit eine Verfahrbewegung der Kabine innerhalb des Gerätegerüsts ermöglichen. Zweckmäßigerweise ist dabei die Anzahl der horizontalen Antriebsbahnen gleich der Anzahl der ersten horizontalen Führungsbahnen und/oder die Anzahl der vertikalen Antriebsbahn gleich der Anzahl an ersten vertikalen Führungsbahnen.

Zweckmäßiger Weise kann dabei ein jeder elektromotorische Antrieb einen Linearmotor umfassen; wobei passiv ausgebildete Antriebsbahnen der Kabine das passive Sekundärteil des jeweiligen Linearmotors aufweisen und aktiv ausgebildete Antriebsbahnen der Gerüstfächer das aktive Primärteil; oder wobei aktiv ausgebildete Antriebsbahnen der Kabine das aktive Primärteil des jeweiligen Linearmotors und passiv ausgebildete Antriebsbahnen das passive Sekundärteil aufweisen können. Als Alternative zu Servo-Motoren kann die Verwendung von Linearmotoren vorteilhaft höhere Beschleunigungen der Kabine und/oder höhere Geschwindigkeiten der Verfahrbewegung der Kabine innerhalb des Gerätegerüsts ermöglichen.

Erfindungsgemäß bevorzugt umfasst die Kabine einen Greifer und/oder einen Teleskopantrieb zum Versetzen eines Lagerguts. Ein Greifer und/oder Teleskopantrieb kann vorteilhaft ein schnelles und sicheres Be- und Entladen der einzelnen Lagerfächer ermöglichen. Je nach Beschaffenheit des Lagerguts, das im Hochregallager eingelagert werden soll, können dabei unterschiedliche Greifer, Teleskopantriebe und/oder unterschiedliche Kabinen zum Einsatz kommen. Es ist zudem von Vorteil, wenn-mittels des Greifers der Kabine ein Versetzen des Lagerguts in erster Horizontalrichtung beidseitig der Kabine möglich ist. Auf diese Weise kann mittels des Greifers vorteilhaft ein Lagergut von einem Lagergerüst zu einem benachbarten Lagergerüst versetzt werden. Auch können mittels der Kabine zwei Lagergerüste bedient werden, sofern sich das Gerätegerüst in einer zwischen zwei Lagergerüsten gebildeten Lagergasse befindet.

Alternativ oder kumulativ dazu kann die Kabine auch einen Teleskopantrieb umfassen, mittels dessen Tischs das Lagergut, insbesondere ein Container, aufgenommen wird. Der Tisch sitzt vorteilhaft unterhalb des Bodens des Containers, insbesondere zwischen zwei etwaigen Kufen des Containers. Zur Aufnahme des Containers wird der Tisch zwischen die beiden Kufen des Containers positioniert. Zum Anheben des Containers vor dessen Entnahme aus einem Lagerfach bzw. zu dessen Absetzen wird der Tisch vorteilhaft in die Vertikalrichtung verfahrbewegt, wofür zweckmäßigerweise die Kabine in die Vertikalrichtung verfahrbewegt wird.

In einer weiteren alternativen oder kumulativen Ausgestaltung der Erfindung kann der Boden des Containers und/oder dessen Kufen auf zueinander beabstandeten, wenigstens teilweise innerhalb des Lagerfachs in der ersten Horizontalrichtung verlaufenden, vorzugsweise L-förmigen, Schienen aufgesetzt sein. Zur Aufnahme des Containers wird der Tisch in dieser Ausgestaltung zwischen die Schienen des Lagerfachs positioniert. Zum Anheben des Containers vor dessen Entnahme aus einem Lagerfach bzw. zu dessen Absetzen wird der Tisch vorteilhaft in die Vertikalrichtung verfahrbewegt, wofür zweckmäßigerweise die Kabine in die Vertikalrichtung verfahrbewegt wird.

Des Weiteren hat sich insbesondere eine Ausgestaltung bewährt, bei der die Kabine für die Verfahrbewegung innerhalb der Führungsbahnen wenigstens ein Bewegungsmittel, vorzugsweise acht an den Ecken der Kabine angeordnete Führungsräder mit in erster Horizontalrichtung weisenden Drehachsen, umfasst; wobei die Führungsbahnen bevorzugt als Linearführungsschienen ausgebildet sind, welche ein zu den, bevorzugt durch Führungsräder gebildeten, Bewegungsmitteln passendes Profil aufweisen. Bewegungsmittel, insbesondere acht an den Ecken der Kabine angeordnete Führungsräder können vorteilhaft die Verfahrbewegungen der Kabinen innerhalb des Gerätegerüsts erleichtern. Insbesondere bei höherer Last in der Kabine kann ein Rollwiderstand leichter zu überwinden sein, als ein Gleitwiderstand, wodurch eine geringere Motorleistung zum Verfahrbewegen der Kabine benötigt und dadurch vorteilhaft Energie eingespart werden kann. Die Verwendung von Führungsrädern, welche ein zu den Führungsbahnen passendes Profil aufweisen, vermindert vorteilhaft Schubbewegungen insbesondere entlang der ersten Horizontalrichtung und gewährleistet so eine stabilere Fahrbewegung der Kabine in die zweite Horizontalrichtung bzw. in die Vertikalrichtung.

Erfindungsgemäß bevorzugt schließlich kann vorgesehen sein, dass wenigstens ein, vorzugsweise ein jedes, Gerüstfach des Gerätegerüsts ein Messsystem zur Messung eines Absolutwerts der Verfahrbewegung der Kabine, umfasst, wobei das Messsystem als ein Inkrementalgeber und ein Mittel zur Positionsbestimmung, und/oder als ein Absolutlage-Messsystem ausgebildet sein kann. Die Anordnung eines Messsystems umfassend ein Inkrementalgeber und ein Mittel zur Positionsbestimmung der Verfahrbewegung der Kabine in wenigstens einem, vorzugsweise in jedem Gerüstfach ermöglicht vorteilhaft die genaue Bestimmung der Position der Kabine innerhalb des Gerätegerüsts. Aufgrund der gewonnen Positionsdaten können dann die elektromotorischen Antriebe wie insbesondere Servo-Motoren der Antriebsbahnen synchronisiert werden. Durch einen Abgleich einer Ist-Position mit einer Soll-Position, vorzugsweise in jedem angefahrenen Gerüstfach, können vorteilhaft Positionsabweichungen, wie diese beispielsweise durch Schlupf und/oder durch Toleranzen in den Abmaßen auftreten, rechnerisch korrigiert werden.

Alternativ oder kumulativ dazu kann in einer preiswerteren Alternative ein Absolutlage-Messsystem vorgesehen werden, wie dieses beispielsweise in der EP 2 995 910 A1 der Anmelderin beschrieben ist.

Die vorliegende Erfindung betrifft auch ein Verfahren zum Betrieb eines Regalbediengeräts wie zuvor beschrieben, mit einem Gerätegerüst, das zu einer dreidimensionalen Fächermatrix angeordnete Gerüstfächer aufweist, und mit mindestens einer zur Aufnahme eines Lagerguts dienenden Kabine, die elektromotorisch angetrieben innerhalb der dreidimensionalen Fächermatrix von jedem Gerüstfach aus in eine Vertikalrichtung und/oder in eine zweite Horizontalrichtung verfahrbewegt wird. Das erfindungsgemäße Verfahren zum Betreiben eines Regalbediengeräts ermöglicht, durch die Verfahrbewegbarkeit wenigstens einer Kabine innerhalb eines Gerätegerüsts des Regalbediengeräts in eine Vertikalrichtung und/oder in eine zweite Horizontalrichtung, vorteilhaft einen schnellen Zugriff, sowie durch einen parallelen Betrieb mehrerer Kabinen einen hohen Umschlag von Lagergütern beim Betrieb eines Hochregallagers.

In Ausgestaltungen des erfindungsgemäßen Verfahrens ist bevorzugt, dass zum Verfahrbewegen einer Kabine innerhalb eines Gerätegerüsts:
- in einem Verfahrensschritt Lagewerte der Zahnriemen einander benachbarter Gerüstfächer sowie eine Position der Kabine innerhalb des Gerüstfachs, in welchem sich die Kabine aktuell befindet, bestimmt wird; und/oder
- in einem Verfahrensschritt sowohl der Lagewert des Zahnriemens als auch die Position der Kabine innerhalb des Gerüstfachs, in welchem sich die Kabine aktuell befindet, als relativer Nullpunkt definiert wird; und/oder
- in einem Verfahrensschritt, der Lagewert des Zahnriemens des in Richtung der Verfahrbewegung der Kabine folgenden Gerüstfachs mit dem Lagewert des Zahnriemens des Gerüstfachs, in welchem sich die Kabine aktuell befindet, synchronisiert wird; und/oder
- in einem Verfahrensschritt die Kabine durch Bewegung des Zahnriemens um einen Abstand in die Richtung der Verfahrbewegung der Kabine verschoben wird, wobei der Abstand insbesondere der Abstand zwischen den Mittelpunkten zweier, in Richtung der Verfahrbewegung der Kabine benachbarter Gerüstfächer ist; und/oder
- in einem Verfahrensschritt, nach einer erfolgten Übergabe der Kabine in das innerhalb des Gerätegerüsts in Richtung der Verfahrbewegung der Kabine folgende Gerüstfach, der Lagewert des Zahnriemens im Gerüstfach, in dem sich die Kabine nach Übergabe befindet, als neuer relativer Nullpunkt definiert wird.

Bei einer Verschiebung quer zur Verzahnrichtung muss die Verzahnung von Zahnstange und Zahnriemen beim Zusammenschieben, also bei der Übergabe der Kabine von einem Gerüstfach zu einem darauffolgenden synchronisiert sein. Die Verzahnposition der Zahnstange ist durch die Verfahrbewegung der Kabine innerhalb der Führungsbahnen festgelegt. Die Verfahrensschritte ermöglichen nun vorteilhaft ganz oder teilweise eine Einstellung der Verzahnung der Zahnriemen auf die Verzahnposition der Zahnstangen der Kabine während der Verfahrbewegung. Insbesondere durch die Definition relativer Nullpunkte der Position der Kabine sowie der aktuellen Verzahnposition der Zahnriemen, bei der Durchfahrt eines, vorzugsweise bei der Durchfahrt jedes, Gerüstfachs können Positionsfehler vorteilhaft rechnerisch korrigiert werden.

Die vorliegende Erfindung stellt erstmals ein Regalbediengerät bereit, das durch die Verfahrbewegbarkeit wenigstens einer Kabine innerhalb eines Gerätegerüsts des Regalbediengeräts in eine Vertikalrichtung und/oder in eine zweite Horizontalrichtung, vorteilhaft einen schnellen Zugriff, sowie durch einen parallelen Betrieb mehrerer Kabinen einen hohen Umschlag von Lagergütern beim Betrieb eines Hochregallagers realisiert.

Weitere Vorteile und Ausgestaltungen werden nachfolgend anhand bevorzugter Ausführungsbeispiele der Erfindung, sowie in Verbindung mit der Zeichnung, näher erläutert.

Darin zeigen schematisch:
- Fig. 1: in einer Draufsicht ein Hochregallager mit Lagergerüsten, und mit Gerätegerüste aufweisenden Regalbediengeräten, wobei das Hochregallager immer abwechselnd ein Lagergerüst und eine Lagergasse mit darin angeordnetem Regalbediengerät aufweist;
- Fig. 2a: in einer Seitenansicht eines der Lagergerüste mit darin aufgenommenen Lagergut;
- Fig. 2b: in einer Seitenansicht eine erste Ausgestaltung eines der Gerätegerüste und darin verfahrbeweglich geführten Kabinen;
- Fig. 3: in einem vereinfachten perspektivischen Ausschnitt Lagergerüste, Regalbediengeräte, Ladefächer, ein Förderband und einen Roboter eines Hochregallagers analog Fig. 1;
- Fig. 4, 5: perspektivisch jeweils einen Ausschnitt einer ersten Variante der ersten Ausgestaltung des Gerätegerüsts eines Regalbediengeräts mit zu einer dreidimensionalen Fächermatrix angeordneten Gerüstfächem und einer darin mittels einer horizontalen und einer vertikalen Antriebsbahn verfahrbeweglich angeordneten Kabine des Regalbediengeräts aus Fig. 3;
- Fig. 6: perspektivisch einen Ausschnitt eines der Gerüstfächer einer zweiten Variante der ersten Ausgestaltung des Gerätegerüsts eines Regalbediengeräts fokussiert auf die für eine horizontale Verfahrbewegung einer Kabine erforderlichen zumindest einen horizontalen Antriebsbahn sowie drei horizontalen Führungsbahnen;
- Fig. 7: perspektivisch einen Ausschnitt eines der Gerüstfächer einer zweiten Variante der ersten Ausgestaltung des Gerätegerüsts eines Regalbediengeräts fokussiert auf die für eine vertikale Verfahrbewegung einer Kabine erforderlichen zumindest einen vertikalen Antriebsbahn sowie drei vertikalen Führungsbahnen;
- Fig. 8: perspektivisch eines der Gerüstfächer einer zweiten Variante der ersten Ausgestaltung des Gerätegerüsts eines Regalbediengeräts, welches die Antriebs- und Führungsbahnen aus Fig. 6 und 7 vereint;
- Fig. 9: perspektivisch zwei elektromotorische Antriebe des Gerüstfachs aus Fig. 8;
- Fig. 10, 11: in einer Drauf- bzw. Seitenansicht einen der Antriebe;
- Fig. 12: perspektivisch eine zum Gerüstfach aus Fig. 8 korrespondierende Kabine;
- Fig. 13 - 15: jeweils in einer Stirnseitenansicht, Längsseitenansicht bzw. Draufsicht die innerhalb des Gerüstfachs aus Fig. 8 angeordnete Kabine aus Fig. 12;
- Fig. 16a - c: in einer Draufsicht die Übergabe einer Kabine zwischen zwei benachbarten Gerüstfächem innerhalb eines Regalbediengeräts;
- Fig. 17: eine zweite Ausgestaltung eines Gerätegerüsts eines Regalbediengeräts in einer Längsseitenansicht;
- Fig. 18a: in einer Seitenansicht einen ausgefahrenen Teleskopantrieb im Moment eines soeben erfolgten Absetzens eines typischen Lagerguts, insbesondere eines Containers;
- Fig. 18b: den ausgefahrenen Teleskopantrieb aus Fig. 18a in einer Draufsicht; und
- Fig. 19a-h: das Zusammenspiel der Zahnriemen, Zahnstangen, Führungsbahnen und Führungsräder in einer erfindungsgemäß bevorzugten dritten Variante der ersten Ausgestaltung des Gerätegerüsts eines Regalbediengeräts bei einer Horizontalbewegung und anschließender Vertikalbewegung der Kabine mittels jeweils zweier horizontaler und zweier vertikaler Antriebsbahnen sowie Führungsbahnen.

Bei der nachfolgenden Beschreibung bevorzugter Ausführungsformen der vorliegenden Erfindung bezeichnen gleiche Bezugszeichen gleich oder vergleichbare Komponenten.

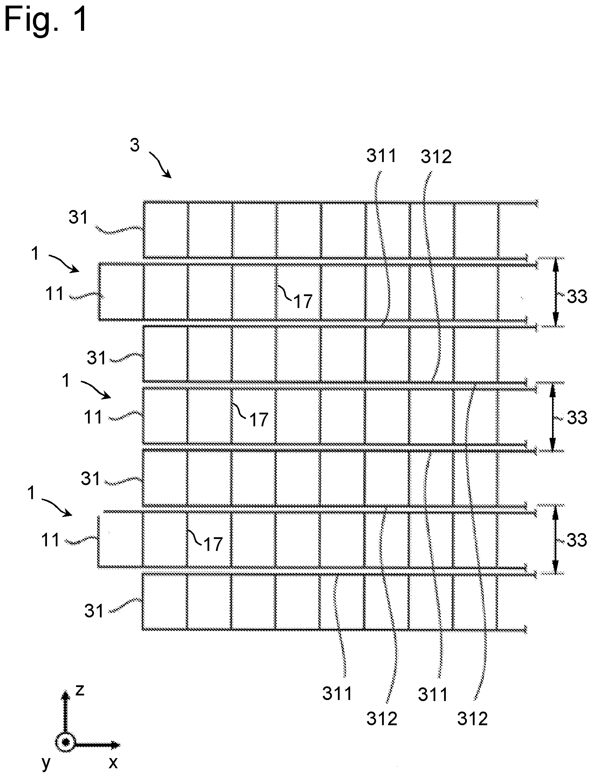

In Fig. 1 zeigt ausschnittsweise in einer Draufsicht ein Hochregallager 3, mit Lagergerüsten 31, und mit jeweils ein Gerätegerüst 11 aufweisenden Regalbediengerät 1, wobei das Hochregallager 3 immer abwechselnd ein Lagergerüst 31 und eine Lagergasse 33 mit darin angeordnetem Regalbediengerät 1 aufweist. Beispielhaft sind vier Lagergerüste 31 dargestellt, die mit ihren Stirnseiten 313 entlang einer ersten Horizontalrichtung Z aufgereiht sind und in eine zweite Horizontalrichtung X verlaufen, die senkrecht zur ersten Horizontalrichtung Z ist. Zwischen benachbarten Lagergerüsten 31 ist in der zweiten Horizontalrichtung X jeweils eine Lagergasse 33 gebildet, innerhalb derer jeweils ein Regalbediengerät 1 angeordnet ist. Jedes der Lagergerüste 31 weist eine erste Seite 311 und eine zweite Seite 312 auf, die jeweils die längsseitige Begrenzung des Lagergerüsts 31 entlang einer zweiten Horizontalrichtung X bilden.

Jedes Lagergerüst 31 lässt sich, im hier dargestellten Beispiel, sowohl über die erste Seite 311 als auch über die zweite Seite 312, welche jeweils in der ersten Horizontalrichtung Z offen ausgestaltet sind, mittels des Regalbediengeräts 1 direkt be- bzw. entladen.

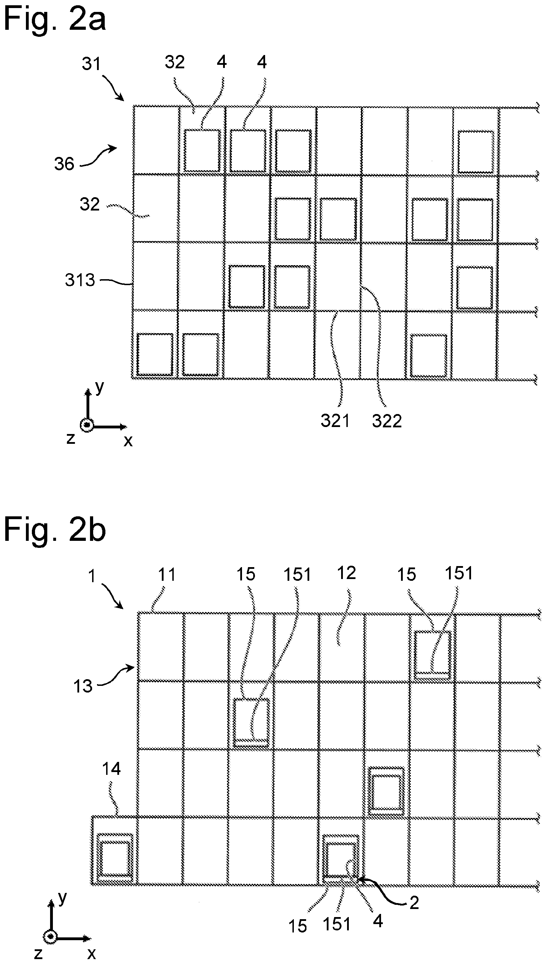

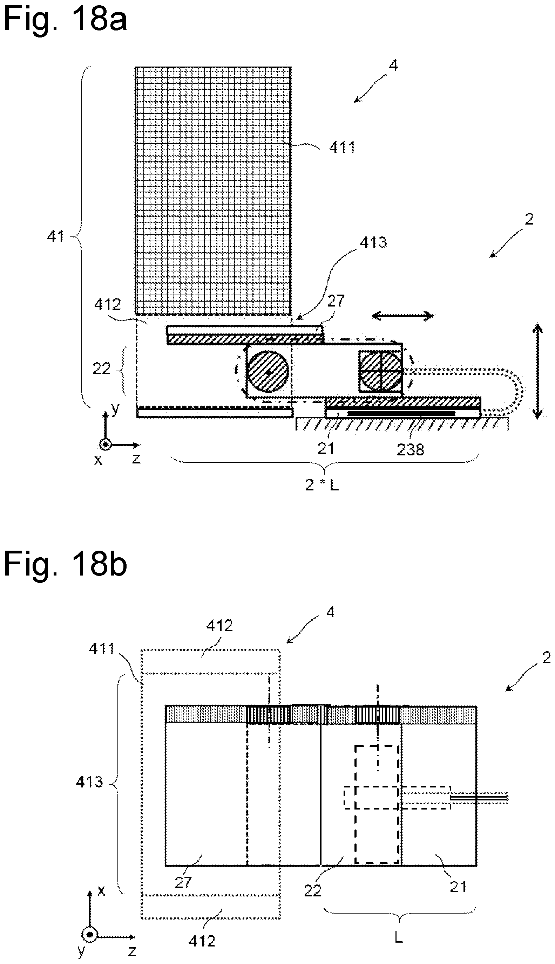

In **Fig. 2a** und **Fig. 2b** zeigen jeweils in einer Seitenansicht eines der Lagergerüste 31 mit darin aufgenommenem Lagergut 4 (**Fig. 2a**) bzw. eines der Gerätegerüste 11 und darin geführten Kabinen 15 (**Fig. 2b**). Das Lagergerüst 31 weist zu einer dreidimensionalen Fächermatrix 36 angeordnete Lagerfächer 32 auf, welche entlang einer zweiten Horizontalrichtung X, sowie einer Vertikalrichtung Y, nebeneinander zu einer dreidimensionalen Fächermatrix 36 des Lagergerüsts 31 angeordnet sind. Die Lagerfächer 21 sind vorzugsweise gleichartig ausgestaltet, und beispielsweise mittels in erster Z und zweiter X Horizontalrichtung sowie in Vertikalrichtung Y verlaufender Streben 322 gebildet. Innerhalb der Lagerfächer 32 ist teilweise Lagergut 4 (**Fig. 2a**) positioniert bzw. positionierbar, beispielsweise über das Gerätegerüst 11 eines Regalbediengeräts 1. Insbesondere ist das Lagergut 4 jeweils ein Container 41, welcher insbesondere in die erste Horizontalrichtung Z verlaufende Containerkufen 412 aufweist (vgl. **Fig. 18a**). Ein solches, in **Fig. 2b** dargestelltes Gerätegerüst 11 weist dementsprechend eine Anzahl an Gerüstfächem 12 auf, die jeweils in drei Raumdimensionen, vorzugsweise quaderförmig und gleichartig ausgestaltet, entlang der zweiten Horizontalrichtung X, sowie der Vertikalrichtung Y, nebeneinander angeordnet eine dreidimensionale Fächermatrix 13 des Regalbediengeräts 1 bilden.

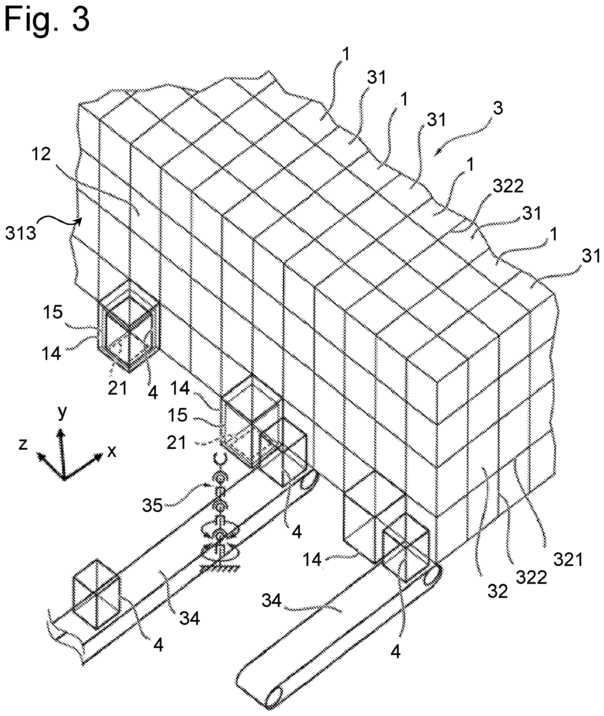

An die dreidimensionale Fächermatrix 13 des Gerätegerüsts 11 kann darüber hinaus ein Ladefach 14 (vgl. auch **Fig. 3**) angefügt sein, welches vorzugsweise gleichartig zu den Gerüstfächern 12 aufgebaut ist, über welches Lagergut 4 dem Regalbediengerät 1 zugeführt und/oder aus diesem abgeführt werden kann.

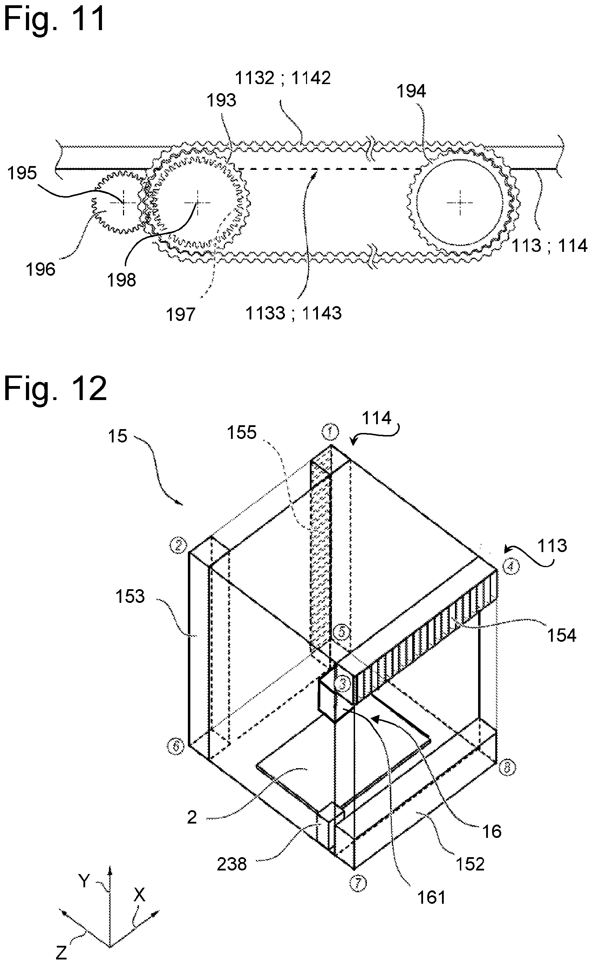

Innerhalb der Gerüstfächer 12 bzw. des Ladefachs 14 ist bei Bedarf eine Kabine 15 (**Fig**. **3**, **Fig. 12**) positioniert bzw. positionierbar, die bei Bedarf ein Lagergut 4 enthält. Die Kabine 15 selbst ist insbesondere elektromotorisch angetrieben, wobei beispielsweise jede Kabine 15 zwei Zahnstangen 154, 155 aufweist, von denen eine 154 in der zweiten Horizontalrichtung X und die verbleibende 155 in Vertikalrichtung Y verläuft. Vorzugsweise sind im Gerätegerüst 11 mehrere, elektromotorisch bewegliche Kabinen 15 mit einem Kabinenboden 151 angeordnet, welche entlang der zweiten Horizontalrichtung X und der Vertikalrichtung Y verfahrbar sind.

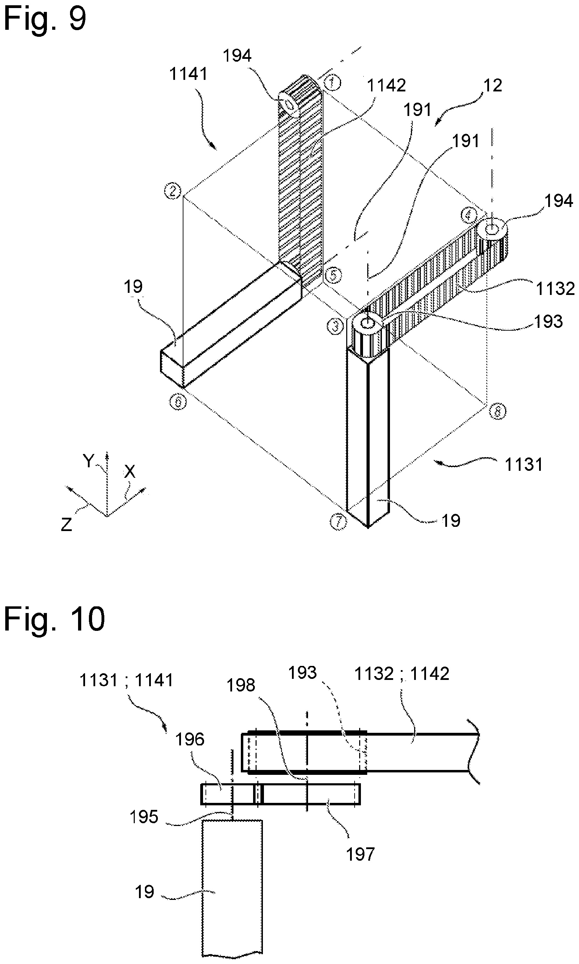

Dazu weist jedes der Gerüstfächer 12 vorzugsweise zwei (in **Fig. 9** dargestellte) elektromotorisch angetriebene Zahnriemen 1132, 1142 auf, von denen einer 1132 ebenfalls in zweiter Horizontalrichtung X und der andere 1142 in Vertikalrichtung Y verläuft. Sofern eine der Zahnstangen 154 oder 155 der Kabine 15 in Eingriff mit dem jeweiligen Zahnriemen 1132 oder 1142 ist, und dieser angetrieben wird, wird folglich die Kabine 15 in die jeweilige Richtung X oder Y bis zum nächsten Gerüstfach 12 und zu dessen Zahnriemen 1132, 1142 verfahrbewegt. Somit ist eine jede Kabine 15 elektromotorisch angetrieben innerhalb der dreidimensionalen Fächermatrix 13 von jedem Gerüstfach 12 aus in die zweite Horizontalrichtung X und in die Vertikalrichtung Y verfahrbewegbar. Zweckmäßigerweise weist das Regalbediengerät 1 eine Anzahl gleichartiger Kabinen 15 auf, die unabhängig voneinander verfahrbewegt werden können.

In einer alternativen Ausgestaltung der Erfindung (nicht dargestellt) können an den Gerüstfächern 12 entlang der horizontalen Antriebsbahnen 113 in zweiter Horizontalrichtung X verlaufende Zahnstangen und/oder entlang der vertikalen Antriebsbahnen 114 in Vertikalrichtung Y verlaufende Zahnstangen angeordnet sein. In einer derartigen Ausgestaltung umfasst dann die Kabine 15 vorteilhaft die elektromotorischen Antriebe 1131, 1141, wobei der jeweilige, in die zweite Horizontalrichtung X verlaufende Zahnriemen 1132 zur Verfahrbewegung der Kabine 15 mit der entlang der horizontalen Antriebsbahn 113 verlaufenden Zahnstange des Gerätegerüsts 11 und/oder der jeweilige, in die Vertikalrichtung Y verlaufende Zahnriemen 1142 zur Verfahrbewegung der Kabine 15 mit der entlang der vertikalen Antriebsbahn 114 verlaufenden Zahnstange des Gerätegerüsts 11 in Eingriff sein kann.

**Fig. 3** zeigt in einem vereinfachten perspektivischen Ausschnitt Lagergerüste 31 und Regalbediengerät 1 eines Hochregallagers 3 analog **Fig. 1**, wobei in dieser Variante (**Fig. 3**) das Hochregallager 3 immer abwechselnd ein Lagergerüst 31 und ein, in einer Lagergasse 33 angeordnetes Regalbediengerät 1 aufweist. Das Lagergerüst 31 weist die einzelnen Lagerfächer 32 auf, deren Kanten mittels der Streben 322 gebildet sind, die in einem rechten Winkel zueinander angeordnet sind. Benachbart wenigstens einer Seite 311 oder 312 eines jeden Lagergerüsts 31 ist ein Regalbediengerät 1 angeordnet. Das Regalbediengerät 1 ist durch das Gerätegerüst 11 gebildet, welches eine Anzahl an Gerüstfächem 12 umfasst. Die Gerüstfächer 12 sind jeweils quaderförmig und gleichartig ausgestaltet. Zudem sind die Gerüstfächer 12 zu einer dreidimensionalen Fächermatrix 13 angeordnet, die in dem gezeigten Beispiel mehrere Zeilen (Ebenen) und mehrere Spalten umfasst. Im Montagezustand ist das Gerätegerüst 11 auf wenigstens eine Seite 311 und/oder 312 eines jeden Lagergerüsts 31 aufgesetzt und an diesem befestigt oder umgekehrt.

Die Anzahl sowie die Anordnung der Gerüstfächer 11 entspricht der Anzahl bzw. Anordnung der Lagerfächer 32. Mit anderen Worten weist das Lagergerüst 31 ebenfalls mehrere Spalten und mehrere Zeilen sowie Ebenen auf. Auch entspricht die Größe der Lagerfächer 32 in der ersten Horizontalrichtung X sowie der Vertikalrichtung Y im Wesentlichen der der Gerüstfächer 12, so dass jedem der Lagerfächer 32 des Lagergerüsts 31 eines der Gerüstfächer 12 zugeordnet ist, welches sich in erster Horizontalrichtung Z im Wesentlichen an das jeweilige Lagerfach 32 anschließt und mit diesem beispielsweise fluchtet.

In einer Ausführungsform der Erfindung umfasst jede der Kabinen 15 einen (nicht dargestellten) Greifer, der sich entweder an dem Boden, an einer Seitenwand oder der Decke der jeweiligen Kabine 15 befindet. Mittels des Greifers wird das sich in der jeweiligen Kabine 15 befindende Lagergut 4 in das zugeordnete Lagerfach 32 befördert oder von diesem in die Kabine 15.

In einer weiteren Ausführungsform der Erfindung umfasst jede der Kabinen 15 einen lediglich schematisch dargestellten Teleskopantrieb 2, der sich an dem Kabinenboden 151 der jeweiligen Kabine 15 befindet. Mittels des Teleskopantriebs 2 lässt sich in der jeweiligen Kabine 15 befindendes Lagergut 4 in das zugeordnete Lagerfach 32 einbringen oder von diesem in die Kabine 15 entnehmen.

In **Fig. 3** ferner dargestellt ist, wie an einer Stirnseite 313 des Hochregallagers 3 an wenigstens einem Regalbediengerät 1 ein Ladefach 14 angeordnet sein kann, welches ein Zuführen bzw. Abführen von Lagergut 4 in das bzw. aus dem Regalbediengerät 1 ermöglicht. Dazu umfasst das Hochregallager 3 beispielsweise Förderbänder 34, die in erster Z oder zweiter X Horizontalrichtung verlaufen, und die jeweils einem der Ladefächer 14 zugeordnet sind. Hierbei ist jedes der Förderbänder 34 in erster Horizontalrichtung Z direkt benachbart neben jeweils einem der Ladefächer 14 angeordnet. Jedes der Ladefächer 14 dient hierbei dem Be- und Entladen einer Kabine 15 des jeweiligen Regalbediengeräts 1. Hierbei wird, sofern sich die Kabine 15 innerhalb des Ladefachs 14 befindet, das Lagergut 4 von dem Förderband 34 in die Kabine 15 oder von dieser auf das jeweilige Förderband 34 befördert. Das Ent- und Beladen des Lagerguts 4 erfolgt vorzugsweise automatisiert, beispielsweise mittels eines Roboters 35, welcher z.B. ein 6-Achs-Gelenkarm-Roboter mit Greifhand ist, wie hier dargestellt.

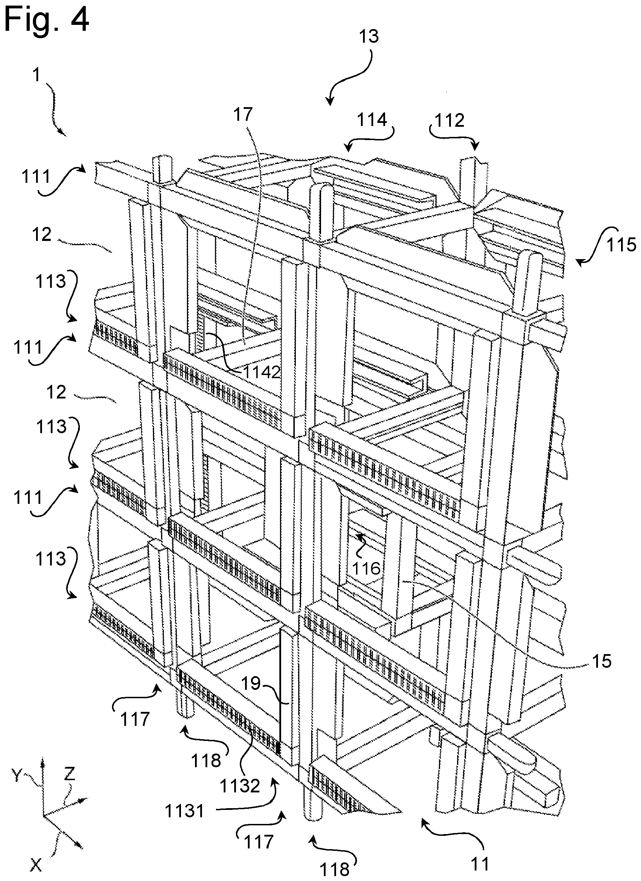

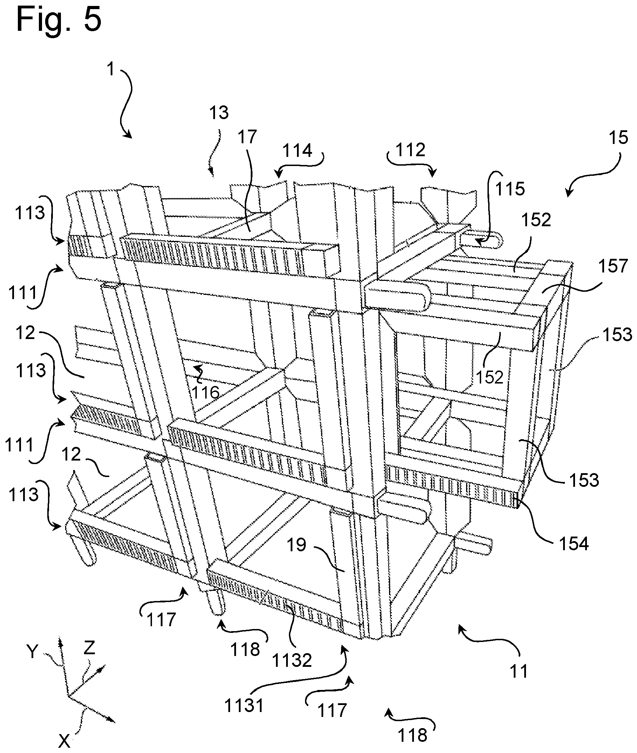

**Fig. 4** **und** **5** zeigen jeweils perspektivisch einen Ausschnitt einer ersten Variante der ersten Ausgestaltung des Gerätegerüsts 11 eines Regalbediengeräts 1 mit zu einer dreidimensionalen Fächermatrix 13 angeordneten Gerüstfächern 12 und einer darin mittels einer horizontalen 113 und einer vertikalen 114 Antriebsbahn verfahrbeweglich angeordneten Kabine 15 des Regalbediengeräts 1 aus **Fig. 3**, welches sich im Wesentlichen ebenfalls in zweiter Horizontalrichtung X und in Vertikalrichtung Y erstreckt. Das Regalbediengerät 1 weist die Kabine 15 auf, die innerhalb der dreidimensionalen Fächermatrix 13 dezentral elektromotorisch angetrieben in die zweite Horizontalrichtung X und in die Vertikalrichtung Y verfahrbar ist. Hierbei kann die Kabine 15 von jedem der Gerüstfächer 12 aus sowohl in die zweite Horizontalrichtung X und die Vertikalrichtung Y verfahren werden. Mit anderen Worten kann von jedem Gerüstfach 12 aus das bzw. die jeweils in zweiter Horizontalrichtung X benachbarten Gerüstfächer 12 sowie das bzw. die in Vertikalrichtung Y benachbarten Gerüstfächer 12 mittels der Kabine 15 direkt erreicht werden. Hierbei erfolgt die Bewegung in zweite Horizontalrichtung X und Vertikalrichtung Y jeweils sukzessive nacheinander. Mit anderen Worten ist in diesem Ausführungsbeispiel die Kabine 15 von jedem der Gerüstfächer 12 aus zu einem benachbarten Gerüstfach 12 elektromotorisch angetrieben verfahrbar, wobei eine Änderung der Richtung erst nach Erreichen des jeweils benachbarten Gerüstfachs 12 ermöglicht ist, und wobei die Bewegung entweder in die zweite Horizontalrichtung X oder die Vertikalrichtung Y ist, hieraus jedoch beliebig gewählt werden kann.

Die Kabine 15 dient der Aufnahme des Lagerguts 4. Bei Betrieb wird mittels der Kabine 15 eines der Gerüstfächer 12 angesteuert, das einem der Lagerfächer 32 zugeordnet ist. Mittels eines Greifers (nicht dargestellt) oder eines Teleskopantriebs 2 der Kabine 15 (vgl. **Fig. 12**) wird das Lagergut 4 dem jeweiligen Lagerfach 32 entnommen und in die sich in dem zugeordneten Gerüstfach 12 befindende Kabine 15 verschoben. Im Anschluss hieran wird mittels der Kabine 15 ein weiteres Gerüstfach 12 angesteuert und mittels des Greifers bzw. Teleskopantriebs 2 der Kabine 15 das Lagergut 4 in das dem weiteren Gerüstfach 12 zugeordnete Lagerfachs 32 verbracht.

Alternativ wird mit der Kabine 15 ein Ladefach 14 oder vergleichbare Entladeposition des Gerätegerüsts 12 angesteuert und das Lagergut 4 dem Regalbediengerät 1 entnommen. Beispielsweise wird bei dieser Position das Lagergut 4 in die Kabine 15 eingeführt und diese anschließend innerhalb der dreidimensionalen Fächermatrix 13 zu einem gewünschten Gerüstfach 12 befördert. Dort wird das Lagergut 4 in das zugehörige Lagerfach 32 befördert.

Insbesondere kann das Regalbediengerät 1 eine Anzahl derartiger Kabinen 15 aufweisen, die innerhalb des gleichen Gerätegerüsts 12 unabhängig verfahrbar sind, was durch den damit realisierten Parallelbetrieb vorteilhaft die Umschlagszeit verkleinert. Somit können die Kabinen 15 unabhängig jedes der Lagerfächer 32 erreichen, wobei mehrere Kabinen 15 unabhängig voneinander und gleichzeitig (also zeitlich parallel) verfahren werden können. Jede Kabine 15 verfährt entweder in die zweite Horizontalrichtung X-Richtung oder in Vertikalrichtung Y-Richtung und kann durch Richtungsänderung bildlich "um die Ecke" fahren.

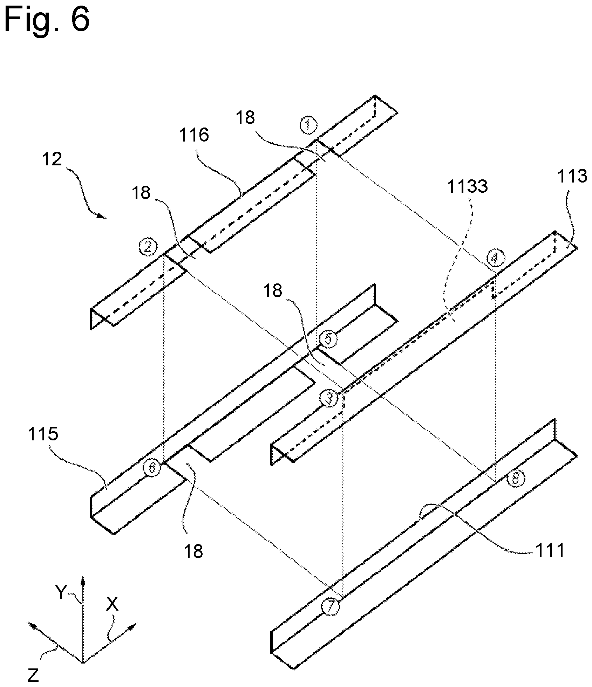

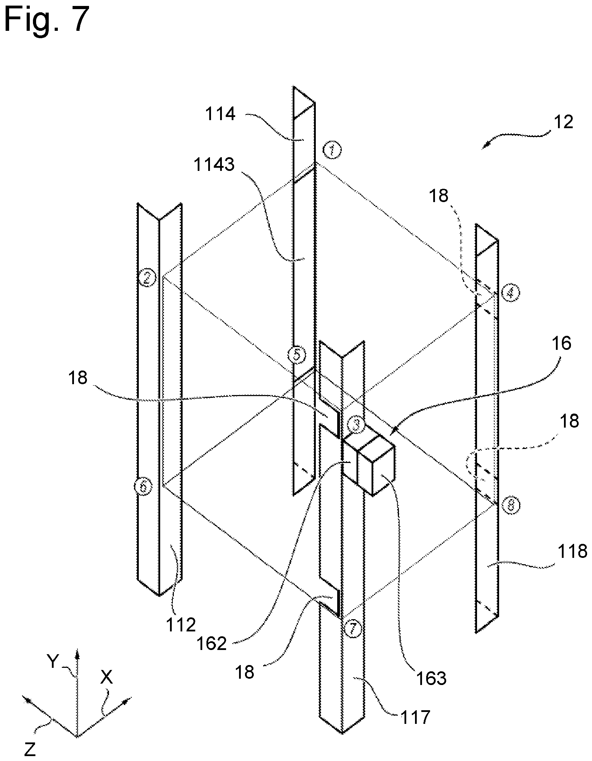

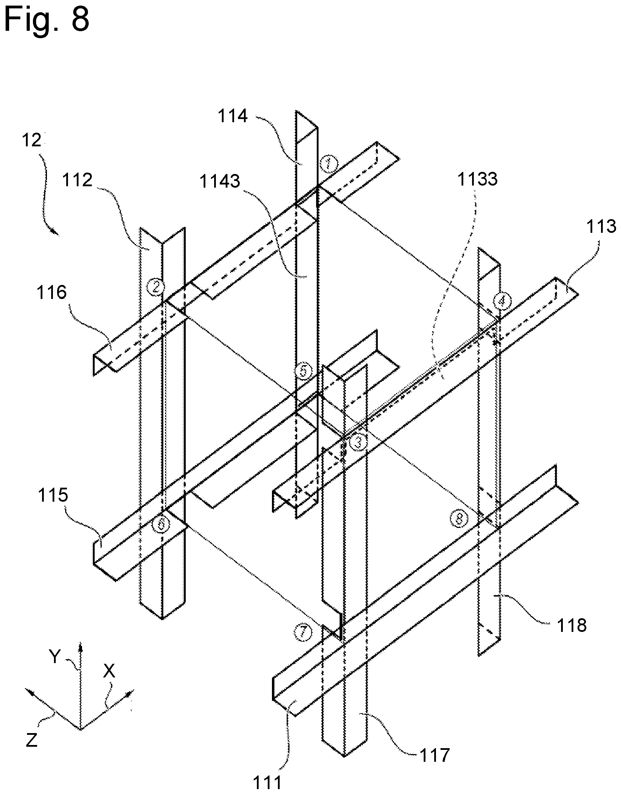

Fig. 6 zeigt perspektivisch einen Ausschnitt eines der Gerüstfächer 12 einer zweiten Variante der ersten Ausgestaltung des Gerätegerüsts 11 eines Regalbediengeräts 1 fokussiert auf die für eine horizontale Verfahrbewegung einer Kabine 15 erforderlichen zumindest einen horizontalen Antriebsbahn 113 sowie drei horizontalen Führungsbahnen 111, 115, 116. Fig. 7 zeigt perspektivisch einen Ausschnitt eines der Gerüstfächer 12 einer zweiten Variante der ersten Ausgestaltung des Gerätegerüsts 11 eines Regalbediengeräts 1 fokussiert auf die für eine vertikale Verfahrbewegung einer Kabine 15 erforderlichen zumindest einen vertikalen Antriebsbahn 114 sowie drei vertikalen Führungsbahnen 112, 117, 118. Fig. 8 zeigt perspektivisch eines der Gerüstfächer 12 einer zweiten Variante der ersten Ausgestaltung des Gerätegerüsts eines Regalbediengeräts, welches die Antriebs- 113, 114 und Führungsbahnen 111, 112, 115, 116, 117, 118 aus Fig. 6 und 7 vereint. Gegenüber der ersten Variante (Fig. 4 und 5) unterscheidet sich die nachfolgend beschriebene zweite Variante in der Wahl der Anordnung der Antriebsbahnen 113 und 114 innerhalb der dreidimensionalen Fächermatrix 13.

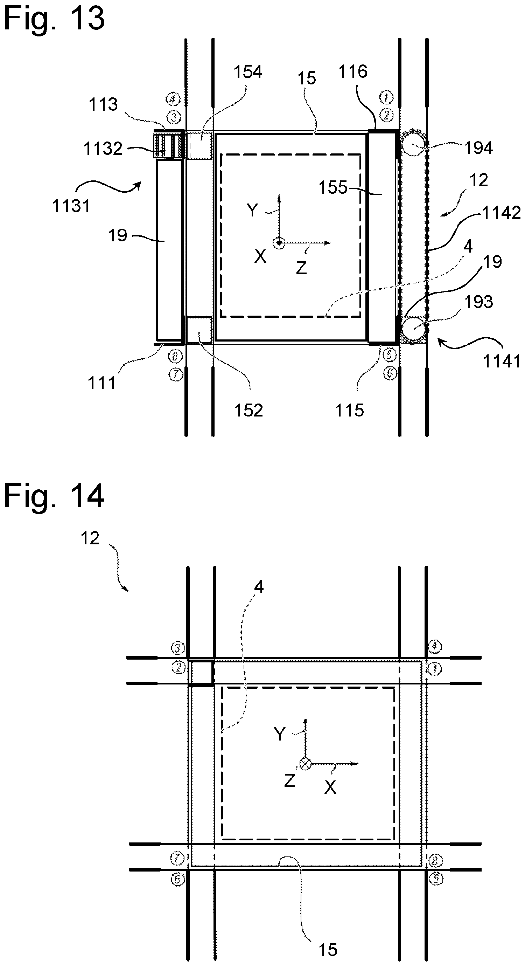

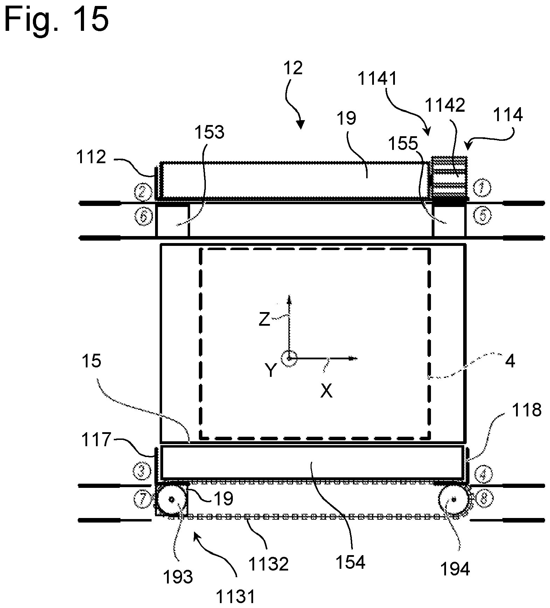

In den **Fig. 6 bis 9** ist in einer isometrischen Darstellung jeweils eines der Gerüstfächer 12 und in **Fig. 12** die Kabine 15 teilweise dargestellt, wobei in **Fig. 6** Bestandteile des Gerätegerüsts 11 gezeigt sind. Im Montagezustand sind die mit den Ziffern 1 bis 8 bezeichneten Eckpunkte der **Fig. 6 bis 9** und der **Fig. 12** deckungsgleich. In den **Fig. 13 bis 15** ist die Kabine 15 mit einem sich hierin befindenden Lagergut 4 innerhalb des Gerüstfachs 12 in einer Stirnseitenansicht, Längsseitenansicht und Draufsicht gezeigt. Die Ziffern 1 bis 8 entsprechen auch hierbei den jeweils in den **Fig. 6 bis 9** sowie **Fig. 12** gezeigten Eckpunkten.

Das dargestellte Gerätegerüst 11 weist eine erste Anzahl von in der zweiten Horizontalrichtung X verlaufenden und in der Vertikalrichtung Y äquidistant übereinander angeordneten horizontalen Führungsbahnen 111, 115, 116 auf, wobei jedem der Gerüstfächer 12 jeweils eine erste horizontale Führungsbahn 111 zugeordnet ist, die einen im Wesentlichen L-förmigen Querschnitt aufweist. In Vertikalrichtung Y oberhalb der ersten horizontalen Führungsbahn 111 ist eine erste horizontale Antriebsbahn 113 angeordnet, die ebenfalls in zweiter Horizontalrichtung X verläuft. Zwischen benachbarten ersten horizontalen Führungsbahnen 111, 115, 116 ist jeweils eine der ersten horizontalen Antriebsbahnen 113 positioniert, die ebenfalls jeweils in Vertikalrichtung Y äquidistant übereinander angeordnet sind. In der ersten Horizontalrichtung Z benachbart zu der jeweils ersten horizontalen Führungsbahn 111 ist eine zweite horizontale Führungsbahn 115 angeordnet, wobei die Anzahl der zweiten horizontalen Führungsbahnen 115 des Gerätegerüsts 11 der Anzahl der ersten horizontalen Führungsbahnen 111 entspricht und gleich der Anzahl der Zeilen der dreidimensionalen Fächermatrix 13 ist. Jedes der Gerüstfächer 12 weist ferner eine dritte horizontale Führungsbahn 116 auf, die ebenfalls in die zweite Horizontalrichtung X verläuft und in die erste Horizontalrichtung Z zur ersten horizontalen Führungsbahn 111 beabstandet ist. Ansonsten entspricht die Position der dritten horizontalen Führungsbahn 116 derjenigen der horizontalen Antriebsbahn 113.

Pro Ebene der dreidimensionalen Fächermatrix 13 ist somit eine der ersten horizontalen Führungsbahnen 111, eine der zweiten horizontalen Führungsbahnen 115, eine der dritten horizontalen Führungsbahnen 116 und eine der horizontalen Antriebsbahnen 113 vorhanden, die insbesondere die in die zweite Horizontalrichtung X verlaufenden Kanten des jeweiligen Gerüstfachs 12 bilden und vorzugsweise jeweils einen im Wesentlichen L-förmigen Querschnitt aufweisen. Sämtlichen Gerüstfächem 12 der gleichen Ebene ist hierbei die gleiche erste 111, zweite 115 und dritte 116 horizontale Führungsbahn sowie die horizontale Antriebsbahn 113 zugeordnet, die in einer bevorzugten Ausgestaltung entlang der vollständigen Länge des Gerätegerüsts 11 in zweiter Horizontalrichtung X verläuft, wobei ein jedes Gerüstfach 12 vorzugsweise einen Abschnitt der Antriebs- 113 bzw. Führungsbahnen 111, 115, 116 begrenzt.

In Fig. 7 sind weitere Bestandteile des Gerätegerüsts 11 dargestellt, das eine zweite Anzahl von vertikalen Führungsbahnen 112, 117, 118 aufweist, die in die Vertikalrichtung Y verlaufen, wobei die zweite Anzahl der Anzahl der Spalten der dreidimensionalen Fächermatrix 13 entspricht. Wiederum ist jedem der Gerüstfächer 12 eine der vertikalen Führungsbahnen 112, 117, 118 sowie eine Antriebsbahn 114 (nicht dargestellt) zugeordnet, wobei ein jedes Gerüstfach 12 vorzugsweise einen Abschnitt der Antriebs- 114 bzw. Führungsbahnen 112, 117, 118 begrenzt. Die vertikalen Führungsbahnen 112, 117, 118 sind in der zweiten Horizontalrichtung X äquidistant nebeneinander angeordnet und befinden sich in einer Ebene mit den zweiten 115 und dritten 116 horizontalen Führungsbahnen. In der gleichen Ebene befinden sich ferner vertikale Antriebsbahnen 114, die ebenfalls in Vertikalrichtung Y verlaufen, und die äquidistant in zweiter Horizontalrichtung X nebeneinander und zwischen jeweils benachbarten vertikalen Führungsbahnen 112, 117, 118 positioniert sind. Ferner ist jedes der Gerüstfächer 12 mittels zweiter vertikaler Führungsbahnen 117 gebildet, deren Position jeweils derjenigen der ersten vertikalen Führungsbahnen 112 entspricht, jedoch in erster Horizontalrichtung Z versetzt ist. Ferner weist das Gerätegerüst 11 eine Anzahl von dritten vertikalen Führungsbahnen 118 auf, deren Position derjenigen der vertikalen Antriebsbahnen 114 entspricht, jedoch ebenfalls in erster Horizontalrichtung Z versetzt ist. Die zweiten 117 und dritten 118 vertikalen Führungsbahnen sind in einer Ebene mit der ersten horizontalen Führungsbahn 111 und der horizontalen Antriebsbahn 113 angeordnet. Die ersten vertikalen Führungsbahnen 112, vertikalen Antriebsbahnen 114, zweiten vertikalen Führungsbahnen 117 und dritten vertikalen Führungsbahnen 118 verlaufen jeweils über die vollständige Ausdehnung des Gerätegerüsts 11 in Vertikalrichtung Y und bilden im Wesentlichen jeweils die in Vertikalrichtung Y verlaufenden Kanten des jeweiligen Gerüstfachs 12.

In **Fig. 8** sind die in **Fig. 6** **und** **7** gezeigten Bahnen 111 bis 118, die bevorzugt jeweils einen L-förmigen Querschnitt aufweisen, zu einem der Gerüstfächer 12 zusammengesetzt dargestellt. Hierbei sind die einzelnen Bahnen 111 bis 118 an deren Knotenpunkten beispielsweise aneinander befestigt, so dass zwei im Wesentlichen plane und in erster Horizontalrichtung Z zueinander beabstandete Flächen bzw. Ebenen erstellt sind. Diese sind beispielsweise mittels in **Fig. 4** **und** **5** gezeigten, in erster Horizontalrichtung Z verlaufende, Stege 17 zu der dreidimensionalen Fächermatrix 13 aneinander fixiert.

In **Fig. 9** sind ein erster elektromotorischer Antrieb 1131 und ein zweiter elektromotorischer Antrieb 1141 des Gerüstfachs 12 dargestellt. Folglich weist jedes der Gerüstfächer 12 zwei elektromotorische Antriebe 1131, 1141 auf, die im Wesentlichen baugleich, jedoch unterschiedlich zueinander orientiert sind und insbesondere Servo-Antriebe sein können. Der erste Antrieb 1131 weist einen Elektromotor 19 auf, dessen Motorachse 191 in Vertikalrichtung Y verläuft, und der mittels eines ersten Zahnrads 193 einen doppelt verzahnten Zahnriemen 1132 antreibt, welcher mittels eines zweiten Zahnrads 194 in zweiter Horizontalrichtung X gespannt ist. Das zweite Zahnrad 194 ist entweder, wie hier gezeigt, nicht separat angetrieben, oder dem zweiten Zahnrad 194 ist ein weiterer, nicht dargestellter elektromotorischer Antrieb zugeordnet. Der Elektromotor 19 ist außenseitig an der zweiten vertikalen Führungsbahn 117 befestigt und der Zahnriemen 1132 ist innerhalb einer ersten Aussparung 1133 der aktiv wirkenden, horizontalen Antriebsbahn 113 positioniert, wobei die Zähne des Zahnriemens 1132 durch die erste Aussparung 1133 hindurch ragen. Die Motorachse 191 des baugleichen zweiten elektromotorischen Antriebs 1141, insbesondere Servo-Antriebs, verläuft in zweiter Horizontalrichtung X und der Zahnriemen 1142 ist mittels des zweiten Zahnrads 194 des zweiten Antriebs 1141 in Vertikalrichtung Y gespannt und wird mittels des Elektromotors 19 angetrieben. Der Elektromotor 19 des zweiten Antriebs 1141, insbesondere Servo-Antriebs, ist im Montagezustand an der zweiten horizontalen Führungsbahn 115 des Gerüstfachs 12 außenseitig angebunden und der Zahnriemen 1142 ragt teilweise durch eine zweite Aussparung 1143 der aktiv wirkenden, vertikalen Antriebsbahn 114. Hierbei sind insbesondere die Zähne des Zahnriemens 1142 innerhalb des Gerüstfachs 12 angeordnet. Die Ausdehnung der ersten 1133 und zweiten 1143 Aussparung in die jeweilige Richtung ist stets kleiner als die Ausdehnung des Gerüstfachs 12 in die jeweilige Richtung.

In **Fig. 10** ist in einer Draufsicht und in **Fig. 11** in einer Seitenansicht der erste 1131 bzw. zweite 1141 Antrieb in einer weiteren Ausführungsform dargestellt. Der Elektromotor 19 treibt mittels dessen Motorwelle 195 ein motorseitiges Zahnrad 196 an, welches auf der Motorwelle 195 drehfest angebunden ist. Mit dem motorseitigen Zahnrad 196 kämmt ein Zwischenzahnrad 197, welches auf einer Antriebswelle 198 drehfest aufsitzt, an der das Zahnrad 193 ebenfalls drehfest befestigt ist. Das motorseitige Zahnrad 196 und das Zwischenzahnrad 197 sind feiner verzahnt als das Zahnrad 193, welches vergleichsweise große Zähne aufweist. Mittels des zweiten Zahnrads 194 ist der jeweilige Zahnriemen 1132, 1142 derart innerhalb der ersten 1133 bzw. zweiten 1143 Aussparung gespannt, dass die Zähne durch die jeweilige Aussparung 1133, 1143 reichen, wobei der Elektromotor 19, das motorseitige Zahnrad 196 und das Zwischenzahnrad 197 auf einer Seite der Aussparung 1133, 1143 verbleiben. Hierbei wird ein Zahneingriff auf die Innenverzahnung des Zahnriemens 1132, 1142 mit einem halben Zahnriemenradumfang über das Zwischenzahnrad 197 erreicht, das durch das feiner verzahnte motorseitige Zahnrad 196 angetrieben wird. Dieses treibt das größer verzahnte Zahnrad 193 für die Innenverzahnung des Zahnriemens 1132, 1142 an, der zusätzlich auch eine Außenverzahnung umfasst. Somit treibt das motorseitige Zahnrad 196 über die Außenverzahnung das Zwischenzahnrad 197 an, welches wiederum mittels des Zahnrads 193, welches einen vergrößerten Durchmesser aufweist, den darauf gespannten Zahnriemen 1132, 1142 antreibt.

Als Elektromotor 19 kann ein vorzugsweise vergleichsweise schlanker Elektromotor 19 herangezogen werden. Beispielsweise weist jeder der Antriebe 1131, 1141 zwei Elektromotoren 19 auf, die gemeinsam einen sog. Verspannantrieb bilden (nicht dargestellt). Dieser umfasst vorzugsweise zwei Synchron-Servomotoren, die mechanisch miteinander verbunden sind, beispielsweise mittels eines Zahnriemens 1132, 1142 oder mittels kämmender Zahnräder. Die Elektromotoren 19 sind ferner elektrisch miteinander verbunden, indem die Sternpunktverschaltung des ersten Elektromotors 19 aufgetrennt ist, und in dem die drei Phasenleitungen mit der Sternpunktverschaltung des zweiten Motors 19 verbunden sind. Die beiden Elektromotoren 19 sind somit elektrisch in Reihe geschaltet und weisen vorzugsweise den gleichen Nennstrom auf. Die beiden Elektromotoren 19 werden mittels lediglich eines einzelnen Wechselrichters gespeist, wobei lediglich einer der Elektromotoren 19 einen Lagegeber aufweist. Die Orientierung der Rotorpole, d.h. der Polradwinkel, der zwei mechanisch miteinander verbundenen Rotoren der beiden Elektromotoren 19 wird bei der Endmontage derart eingestellt, dass die Polradwinkel zueinander um 90° elektrisch gegeneinander versetzt sind. Der feldorientierte Betrieb dieser Motorenanordnung erlaubt nun zwischen den beiden Motor-Drehmomenten einen Drehmomentunterschied, weswegen ein Verspanndrehmoment erzeugt werden kann. Da zwei Elektromotoren 19 eingesetzt sind, kann das erforderliche Drehmoment auf die beiden Elektromotoren 19 aufgeteilt werden. Beispielsweise weist jeder der elektromotorischen Antriebe 1131, 1141, insbesondere jeder der Servo-Antriebe einen Umrichter auf, welche somit dezentral verteilt sind. Beispielsweise befinden sich diese Umrichter innerhalb eines Gehäuses des jeweiligen Elektromotors 19 oder sind an diesem endseitig, dem motorseitigen Zahnrad 196 gegenüberliegend angeflanscht.

In **Fig. 12** ist in einer isometrischen Ansicht entsprechend der **Fig. 6 bis 9** die Kabine 15 schematisch vereinfacht dargestellt. Die Kabine 15 ist im Wesentlichen quaderförmig ausgestaltet und weist bevorzugt bodenseitig den Teleskopantrieb 2 auf. Die Außenseite der Kabine 15 wird mittels einer in die zweite Horizontalrichtung X verlaufenden Führungsstange 152 und einer in die Vertikalrichtung Y verlaufenden zweiten Führungsstange 153 gebildet. Die beiden Zahnstangen 154, 155 sind zueinander windschief orientiert und kreuzen sich folglich ohne sich zu schneiden. Die Führungsstangen 152, 153 und die Zahnstangen 154, 155 der Kabine 15 sind vorzugsweise über Stege 157 miteinander verbunden (vgl. Fig. 5). Bei einer Verfahrbewegung der Kabinen 15 in die zweite Horizontalrichtung X gleitet die erste Führungsstange 152 an der ersten horizontalen Führungsbahn 111 der jeweiligen Ebene der dreidimensionalen Fächermatrix 13 entlang und wird somit mittels dieser geführt. Bei einer Verfahrbewegung der Kabine 15 in die Vertikalrichtung Y gleitet die zweite Führungsstange 153 an der jeweiligen ersten vertikalen Führungsbahn 112 der jeweiligen Spalte der dreidimensionalen Fächermatrix 13 entlang und wird somit geführt. Mit anderen Worten ist die zweite Führungsstange 153 mit einer der ersten vertikalen Führungsbahnen 112 in diesem Fall wirkverbunden. Die Kabine 15 weist ferner eine erste Zahnstange 154 auf, die bezüglich der ersten Führungsstange 152 in Vertikalrichtung Y versetzt ist und in zweiter Horizontalrichtung X verläuft. Ferner umfasst die Kabine 15 eine zweite Zahnstange 155, die bezüglich der zweiten Führungsstange 153 in zweiter Horizontalrichtung X versetzt ist und in Vertikalrichtung Y verläuft. Mittels der vier Stangen 152, 153, 154, 155 und den Stegen 157 sind die dreidimensionalen Umrisse der Kabine 15 definiert, wobei innerhalb des Umrisses ein Aufnahmeraum für das Lagerguts 4 bereitgestellt ist.

Im Montagezustand ist die Kabine 15 in der ersten Horizontalrichtung Z zwischen den ersten horizontalen Führungsbahnen 111 und den ersten vertikalen Führungsbahnen 112 angeordnet, und die Ausdehnung (Umriss) der Kabine 15 in die Vertikalrichtung Y ist kleiner als der Abstand der ersten horizontalen Führungsbahnen 111 zueinander. Ferner ist die Ausdehnung (Umriss) der Kabine 15 in die zweite Horizontalrichtung X kleiner als der Abstand der ersten vertikalen Führungsbahnen 112 zueinander. Folglich wird die Kabine 15 jeweils mittels einer der ersten horizontalen Führungsbahnen 111 bei einer Verfahrbewegung in die zweite Horizontalrichtung X oder mittels einer der ersten vertikalen Führungsbahnen 112 bei einer Verfahrbewegung in die Vertikalrichtung Y geführt. Die zweiten 115 und dritten 116 horizontalen Führungsbahnen weisen im Bereich des Knotenpunkts mit der ersten vertikalen Führungsbahn 112 sowie der vertikalen Antriebsbahn 114 Schlitze 18 auf, so dass die Kabine 15, und insbesondere die zweite Führungsstange 153 und die zweite Zahnstange 155 bei einer Verfahrbewegung der Kabine 15 in die Vertikalrichtung Y ungehindert durch diese Führungsbahnen 115, 116 hindurchgeführt werden können. Auch weisen die zweiten 117 und die dritten 118 vertikalen Führungsbahnen im Bereich der Knotenpunkte mit der ersten horizontalen Führungsbahn 111 und der horizontalen Antriebsbahn 113 derartige Schlitze 18 auf, durch die ein Führen der ersten Führungsstange 152 und der ersten Zahnstange 154 bei einer Verfahrbewegung der Kabine 15 in die zweite Horizontalrichtung X ermöglicht ist. Zur Erzielung einer Vefahrbewegung der Kabine 15 werden die jeweiligen Antriebe 1131, 1141 geeignet bestromt, wobei der Zahnriemen 1132, 1142 in Eingriff mit der jeweiligen Zahnstange 154, 155 ist.

Somit kann die Kabine 15 ungehindert entweder in die zweite Horizontalrichtung X oder die Vertikalrichtung Y verfahren werden, wobei die jeweiligen Führungsbahnen 115, 116, 117, 118 an den erforderlichen Stellen mittels der Schlitze 18 versehen sind. Innerhalb der Aussparungen 1133, 1143 der jeweiligen Antriebsbahnen 113 bzw. 114 wird der Zahnriemen 1132, 1142 bewegt, wobei die jeweilige Zahnstange 154, 155 von einem der Zahnriemen 1132 oder 1142 zum Zahnriemen 1132 bzw. 1142 des benachbarten Gerüstfachs 12 weitergereicht wird. Hierbei wird die Stoßstelle der beiden Zahnriemen 1132, 1142 von der jeweiligen Zahnstange 154 bzw. 155 überfahren, wofür die Position der Zähne der beiden Zahnriemen 1132, 1142 synchronisiert ist. Beispielsweise werden die Zähne der Zahnstange 155 bzw. 154 bei einer Verfahrbewegung in die zweite Horizontalrichtung X bzw. die Vertikalrichtung Y und/oder diejenigen der Zahnriemen 1142, 1132 in die jeweilige Richtung der Verfahrbewegung der Kabine 15 auseinander- bzw. zusammengeschoben, also eine horizontale bzw. vertikale Querverschiebung zulassend quer zur jeweiligen Verzahnungsrichtung. Hierbei werden die Positionen der Zähne der jeweiligen Zahnstange 155, 154 bzw. der Zahnriemen 1142, 1132 synchronisiert. Um ein direktes Anstoßen zwischen den Zahnkanten der Zahnriemen 1142, 1132 und der Zahnstangen 155, 154 zu vermeiden sind die Zahnkanten der Zahnstangen 155, 154 vorzugsweise angefast (angeschrägt) ausgebildet. Zweckmäßigerweise werden in Richtung der Verfahrbewegung der Kabine 15 lediglich diejenigen Antriebe 1131, 1141 der jeweils benachbarten Gerüstfächer 12 betrieben, innerhalb derer sich die Kabine 15 befindet. Mit anderen Worten werden gemäß erster Ausgestaltung nach **Fig. 2a** **ff** stets maximal zwei der Antriebe 1131, 1141 des vollständigen Gerätegerüsts 11 bei Bewegung in Verfahrrichtung lediglich einer einzigen Kabine 15 angetrieben.

Des Weiteren trägt die Kabine 15 die beiden Zahnstangen 154, 155, deren Länge der Kabine 15 in die zweite Horizontalrichtung X bzw. in die Vertikalrichtung Y entspricht. Bei einer Bewegung der Kabine 15 in die zweite Horizontalrichtung X ist die erste Zahnstange 154 mit dem Zahnriemen 1132 eines der ersten Antriebe 1131 einer der horizontalen Antriebsbahnen 113 in Eingriff. Bei einer Bewegung der Kabine 15 in die Vertikalrichtung Y ist die zweite Zahnstange 155 mit dem Zahnriemen 1142 eines der zweiten Antriebe 1141 einer der vertikalen Antriebsbahnen 114 in Eingriff. Die Kabine 15 weist einen schematisch dargestellten Stromspeicher 238 vorzugsweise in Form einer wieder aufladbaren Batterie auf, mittels derer die Stromversorgung des Greifers und/oder des Teleskopantriebs 2 erfolgt. Ferner kann die Kabine 15 einen ersten Stecker 161 umfassen, der bei Stillstand der Kabine 15 mit einem zweiten Stecker 162 am Gerüstfach 12 unter Ausbildung einer elektrischen Steckverbindung 16 elektrisch kontaktiert ist. Jedem der Gerüstfächer 12 ist einer der zweiten Stecker 162 zugeordnet. Mittels der Steckverbindung 16 wird die Kabine 15 mit elektrischer Energie zum Aufladen des Stromspeichers 238 sowie zum Betrieb des Greifers bzw. des Teleskopantriebs 2 versorgt. Ferner können mittels der elektrischen Steckverbindung 16 Informationen zwischen der Kabine 15 und dem Gerätegerüst 11 ausgetauscht werden, wofür bevorzugt ein Feldbus verwendet wird. Alternativ oder kumulativ kann der Stromspeicher 238 auch während der Verfahrbewegungen der Kabine 15 mittels wenigstens eines in Drehung versetzten Dynamos, vorzugsweise mittels wenigstens eines in einem der Führungsräder 159 der Kabine 15 angeordneten Nabendynamo mit elektrischer Energie aufgeladen werden (hier nicht dargestellt).

Somit wird bei Stillstand der Kabine 15 der Greifer bzw. der Teleskopantrieb 2 mittels eines nicht näher dargestellten Antriebs betrieben, wofür die elektrische Steckverbindung 16 verwendet wird. Diese kann ferner für die Signalübertragung von Informationen vom ortsfesten Gerätegerüst 11 auf die Kabine 15 und zurück verwendet werden. Der erste Stecker 161 kann an der Kabine 15 befestigt und der zweite Stecker 162 in Form einer Steckdose an dem Gerätegerüst 11 sein. Der Teleskopantrieb 2 der Kabine 15 ist vorzugsweise wie in der DE 10 2016 117 941.8 der Anmelderin bzw. in der daraus hervorgegangenen PCT-Anmeldung PCT/DE2017/xxxxxx vom heutigen Tage beschrieben, ausgebildet, auf welche ergänzend vollumfänglich Bezug genommen wird. Demgemäß kann der Teleskopantrieb 2 der Kabine 15 mit seinem Tisch 27 das Lagergut 4 in Form eines Containers 41 aufnehmen. Der Tisch 27 sitzt dabei vorzugsweise unterhalb des Containerkörpers 411 zwischen den zwei Kufen 412 des Containers 41. Sitzt der Container 41 auf seinen zwei Kufen 412 im Lagerfach 32, so ist der Tisch 27 des Teleskopantriebs 2 mit der Kabine 15 derart in Vertikalrichtung Y zu positionieren, dass der Tisch 27 zwischen die zwei Kufen 412 hinein- bzw. herausfahren kann, nachdem der Container 41 innerhalb des Lagerfachs 32 auf einen Lagerfachboden 321 abgesetzt wurde. Wird der Tisch 27 des Teleskopantriebs 2 mit der Kabine 15 in Vertikalrichtung Y angehoben, so wird der Container 41 ebenfalls angehoben und kann nun in die erste Horizontalrichtung Z verfahren werden (vgl. **Fig. 18** **a**).

Diese vergleichsweise geringe Bewegung in Vertikalrichtung Y wird insbesondere mittels des zweiten Antriebs 1141 durchgeführt. Hierbei ist bei Bestehen der elektrischen Steckverbindung 16 der zweite Stecker 162 um eben diese Vertikalbewegung bezüglich eines ortsfesten Punktes beweglich. Dies erfolgt beispielsweise über einen vergleichsweise kleinen Kabelschlepp (vgl. **Fig. 18** **b**).

Jedes Gerüstfach 12 kann ferner einen Elektrohubmagneten 163 aufweisen, der zur Erstellung und/oder dem Lösen der elektrischen Steckverbindung 16 dient. Falls die elektrische Steckverbindung 16 erstellt ist, wird beispielsweise der zweite Stecker 162, der mittels eines Elektromagneten am Elektrohubmagneten 163 festgehalten war, sobald die Kabine 15 bewegt werden soll, gelöst. Insbesondere löst sich der zweite Stecker 162 vom Elektrohubmagneten 163, falls die Vertikalbewegung Y zum Anheben des Lagerguts 4 ausgeführt wird. Nach erfolgter Vertikalbewegung Y wird erneut mittels des Elektrohubmagneten 163 und des Elektromagneten der zweite Stecker 162 aus dem ersten Stecker 161 gezogen und somit in deren Grundstellung verfahren.

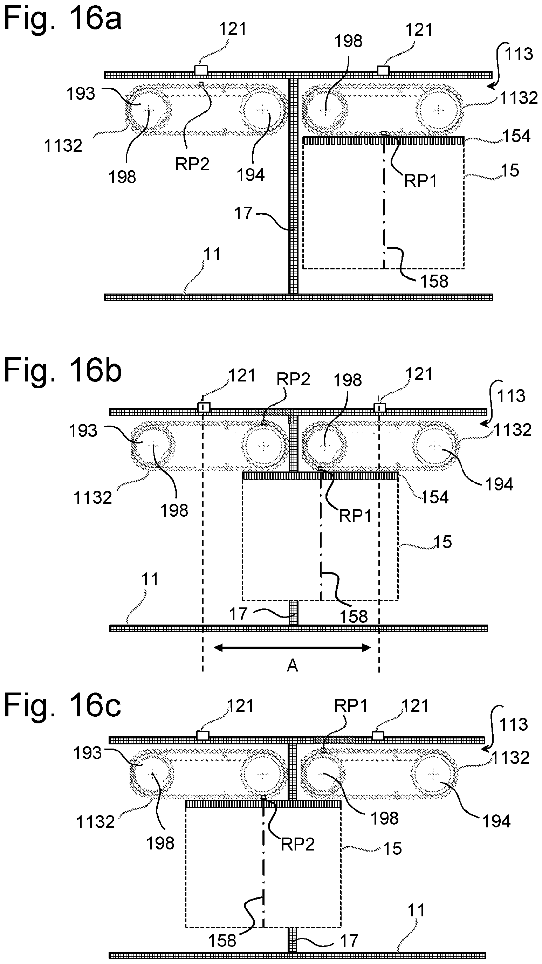

Die **Fig. 16** a-c zeigen in einer Draufsicht die Übergabe einer Kabine 15 zwischen zwei benachbarten Gerüstfächem 12 innerhalb eines Regalbediengeräts 1. Wie zu sehen ist, umfasst wenigstens ein, vorzugsweise wie dargestellt ein jedes, Gerüstfach 12 des Gerätegerüsts 11 ein Messsystem 121 zur Messung eines Absolutwerts einer Verfahrbewegung der Kabine 15. Das Messsystem 121 kann dabei als ein Absolutlage-Messsystem und/oder vorzugsweise als ein Inkrementalgeber und ein Mittel zur Positionsbestimmung ausgebildet sein. Beim Verfahren der Kabine 15 innerhalb eines Gerätegerüsts 11 können in einem ersten Verfahrensschritt vorteilhaft Lagewerte RP1, RP2 der Zahnriemen 1132, 1142, hier dargestellt des ersten Zahnriemens 1132, einander benachbarter Gerüstfächer 12, sowie eine Position 158 der Kabine 15 innerhalb des Gerüstfachs 12, in welchem sich die Kabine 15 aktuell befindet, bestimmt werden. Bevorzugt kann zur Bestimmung der Position 158 der Kabine 15 an deren erster 154, und/oder in **Fig. 12** dargestellter zweiter 155, Zahnstange eine Markierung angeordnet sein. Sowohl der Lagewert RP1 des Zahnriemens 1132 (analog beim Zahnriemen 1142 aus **Fig. 9**) als auch die Position 158 der Kabine 15 innerhalb des Gerüstfachs 12, in welchem sich die Kabine 15 aktuell befindet, können sodann vorteilhaft als relativer Nullpunkt definiert werden (**Fig. 16** **a**).

Erfindungsgemäß bevorzugt kann dann der Lagewert RP2 des Zahnriemens 1132 oder 1142 des in Bewegungsrichtung der Kabine 15 folgenden Gerüstfachs 12 mit dem Lagewert RP1 des Zahnriemens 1132 oder 1142 des Gerüstfachs 12, in welchem sich die Kabine 15 aktuell befindet, synchronisiert werden. Dadurch können vorteilhaft die im ersten Verfahrensschritt bestimmte Position 158 der Kabine 15, sowie der Lagewert des Zahnriemens 1132 oder 1142, welcher im aktuell befahrenen Gerüstfach 12 angeordnet ist, an den jeweils in Bewegungsrichtung der Kabine 15 folgenden Zahnriemen 1132 oder 1142 weitergegeben werden. Dadurch kann sich der jeweils in Richtung der Verfahrbewegung der Kabine 15 folgende Zahnriemen 1132 oder 1142 erfindungsgemäß bevorzugt auf die Position 158 der Kabine 15 bzw. den Lagewert RP1 des vorherigen Zahnriemens 1132 im Sinne einer "Positionierung auf ein bewegtes Ziel" vor der Übergabe der Kabine 15 ausrichten.

In **Fig. 16 b** ist gezeigt, wie in einem nächsten Verfahrensschritt die Kabine 15 durch Bewegung des Zahnriemens 1132 oder 1142 des aktuell befahrenen Gerüstfachs 12 um einen Abstand A in Richtung der Verfahrbewegung der Kabine 15 verschoben wird, wobei der Abstand A insbesondere der Abstand zwischen den Mittelpunkten zweier, in Richtung der Verfahrbewegung der Kabine 15 benachbarter Gerüstfächer 12 ist.

In **Fig. 16 c** ist zu sehen, dass nach einer erfolgten Übergabe der Kabine 15 in das innerhalb des Gerätegerüsts 11 in Richtung der Verfahrbewegung der Kabine 15 folgende Gerüstfach 12, der Lagewert RP2 des Zahnriemens 1132 oder 1142 im Gerüstfach 12, in dem sich die Kabine 15 nach Übergabe befindet, vorzugsweise als neuer relativer Nullpunkt definiert werden kann. Dieses Rücksetzen der Positions- und/oder Lagewerte der Kabine 15 bzw. der Zahnriemen 1132, 1142 nach erfolgter Übergabe von einem aktuellen Gerüstfach 12 zum jeweils in Richtung der Verfahrbewegung der Kabine 15 folgenden Gerüstfach 12 ermöglicht vorteilhaft die rechnerische Korrektur etwaiger während der Verfahrbewegung durch bspw. Schlupf, aufgetretene Abweichung der Positions- und/oder Lage-Sollwerten von den entsprechenden Ist-Werten.

Dieses erfindungsgemäß bevorzugte Verfahren ermöglicht vorteilhaft die Gewährleistung einer Synchronität der Verzahnungen von Zahnstange 154, 155 und jeweiligem Zahnriemen 1132, 1142, welche für eine Verfahrbewegung quer zur Verzahnungsrichtung notwendig ist. Da die Verzahnposition der Zahnstangen 154, 155 der Kabine 15 durch die Verfahrbewegung der Kabine 15 in den Führungsbahnen 111, 115, 116; 112, 117, 118 wenigstens abschnittsweise festgelegt ist, wird dabei vorteilhaft berücksichtigt, dass die Lagewerte RP1, RP2 der jeweiligen Zahnriemen 1132 oder 1142 auf die Position 158 der Kabine 15 eingestellt werden sollten.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

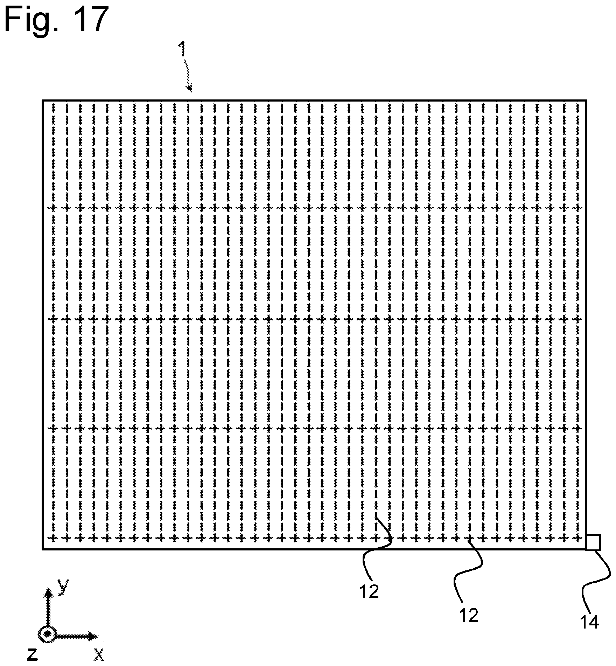

So zeigt **Fig. 17** beispielhaft eine zweite Ausgestaltung eines Gerätegerüst 11 eines Regalbediengeräts 1 in einer Längsseitenansicht (also mit Blick entlang der ersten Horizontalrichtung Z), in welcher eine zur Aufnahme eines Lagerguts 4 dienende Kabine 15 elektromotorisch angetrieben innerhalb der dreidimensionalen Fächermatrix 13 von jedem Gerüstfach 12 aus in eine Vertikalrichtung Y und von jedem elften Gerüstfach 12 aus in eine zweite Horizontalrichtung X verfahrbewegbar ist (in **Fig. 17** jeweils durch ein Pluszeichen symbolisiert). Eine derartige "Rasterung" ermöglicht vorteilhaft die Einsparung von insbesondere ersten elektromotorischen Antrieben 1131, bei annähernd gleich schneller Erreichbarkeit der einzelnen Gerüstfächer 11 durch die Kabine 15 und damit annähernd gleicher Flexibilität in der Bedienung des Regalbediengeräts 1.

In anderen Ausgestaltungen (nicht dargestellt) der vorliegenden Erfindung kann die Rasterung, also die Abfolge der Reihen an Gerüstfächern 12, von denen aus die Kabine 15 in eine Vertikalrichtung Y und in eine zweite Horizontalrichtung X verfahrbar ist, insbesondere je nach Kundenwunsch, vorteilhaft variiert werden, wobei die unterste Reihe an Gerüstfächern 12 besonders bevorzugt stets eine der Reihen an Gerüstfächern 12 ist, von denen aus die Kabine 15 in eine Vertikalrichtung Y und in eine zweite Horizontalrichtung X verfahrbar ist. Zudem ist es von Vorteil, wenn an dieser Reihe an Gerüstfächern 12 wenigstens ein Ladefach 14 zum Be- und/oder Entladen angeordnet ist.

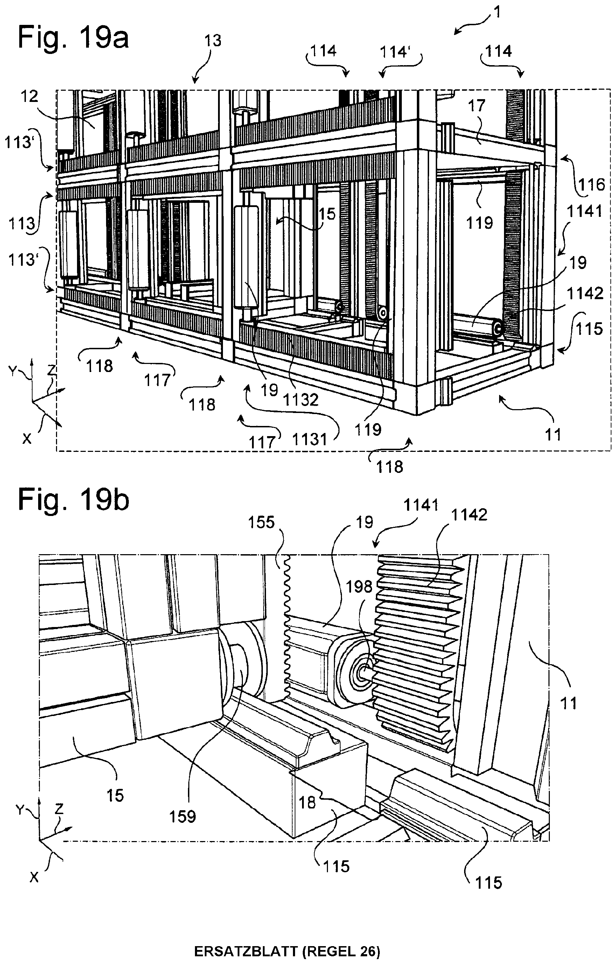

**Fig. 18a** in einer Seitenansicht und **Fig. 18b** in einer Draufsicht zeigen schließlich den ausgefahrenen Teleskopantrieb 2 der Kabine 15 eines erfindungsgemäß bevorzugten Regalbediengeräts 1, im Moment eines soeben erfolgten Absetzens eines typischen Lagerguts 4, insbesondere eines Containers 41. Erkennbar ist, wie der jeweilige Gesamthub des Teleskopantriebs 2 mehr als 2 ^{∗} die Länge einer Basis L des Teleskopantriebs 2 betragen muss, wenn das Lagergut 4 in seiner gesamten Breite unterfasst werden soll. Dabei zeigen **Fig. 18a** und **18b** beispielhaft eine schon auf 2 ^{∗} L rückgeführte Verfahrbewegung in erster Horizontalrichtung Z. Infolgedessen ist es ermöglicht, zwei zueinander benachbarte und an dieselbe Lagergasse 33 angrenzende Lagergerüste 31 mittels des gleichen Regalbediengeräts 1 zu bestücken, wobei der das Lagergut 4 tragende Tisch 27 des Teleskopantriebs 2 in eine Aussparung 413 zwischen den Kufen 412 des Containers 41 oder einen vergleichbaren Freiraum unter dem Lagergut 4 ausgefahren werden kann. Aufgrund eines ersten Schlittens 22 und des darauf angeordneten Tisches 27 ist die maximale Verbringungslänge in erster Horizontalrichtung Z vergrößert. Das Absetzen bzw. Anheben eines typischen Lagerguts 4 kann vorteilhaft durch eine Verfahrbewegung der Kabine 15 (in der **Fig. 18a** nur durch den Kabinenboden 151 repräsentiert) in Vertikalrichtung Y erfolgen. In den **Fig. 19a** bis **19h** ist schließlich das Zusammenspiel der Zahnriemen 1132; 1142 , der Zahnstangen 154; 155, der Führungsbahnen 111; 115; 116; 112; 117; 118 und der Führungsräder 159 in einer erfindungsgemäß bevorzugten dritten Variante der ersten Ausgestaltung des Gerätegerüsts 11 eines Regalbediengeräts 1 bei einer Verfahrbewegung der Kabine 15 zunächst in zweiter Horizontalrichtung X und anschließender Vertikalrichtung Y mittels jeweils zweier horizontaler 113, 113' und zweier vertikaler 114, 114' Antriebsbahnen sowie Führungsbahnen 115, 116, 117, 118 veranschaulicht. Gegenüber der ersten (Fig. 4 und 5) und zweiten (insb. Fig. 6 bis 8) Variante unterscheidet sich die nachfolgend beschriebene dritte Variante darin, dass jeweils zwei horizontale 113, 113' und zwei vertikale 114, 114' Antriebsbahnen innerhalb der dreidimensionalen Fächermatrix 13 angeordnet sind.

**Fig. 19a** zeigt einen Teil des Gerätegerüsts 11 eines erfindungsgemäßen Regalbediengeräts 1 mit einer sich in der untersten Reihe der Gerüstfächer 12 horizontal verfahrbewegenten Kabine 15. Das Gerätegerüst 11 ist dabei vorteilhaft aus zu einer dreidimensionalen Fächermatrix 13 angeordneten Gerüstfächem 12 gebildet. Ein derartiges Gerätegerüst 11 kann aufgrund seiner dreidimensionalen Bauweise vorteilhaft genügend Eigenstabilität für eine präzise Führung bieten, um schnelle Verfahrbewegungen der Kabine 15 in eine Vertikalrichtung Y und/oder in eine zweite Horizontalrichtung X zu ermöglichen. Dies ist insbesondere deshalb von Vorteil, da Hochregallager 3 für gewöhnlich keine ideal-starren Gebilde sind, sondern beispielsweise aufgrund von Temperaturschwankungen und/oder mechanischen Einwirkungen in Bewegung, insbesondere zum Schwanken, neigen können. Solch dynamische Bewegungen können Abweichungen in Größenordnungen von mehreren Millimetern in der jeweils aktuellen Position und/oder Ausrichtung des Hochregallagers 3 bzw. benachbarter Hochregallager 3 bewirken, welche das tolerierbare Maß insbesondere für eine, sich zwischen zwei benachbarten Hochregallagern 3 (wie im eingangs zitierten Stand der Technik vorgeschlagen), bewegende Förderkörbe bzw. Lastwägen übersteigen kann. Ein erfindungsgemäßes Regalbediengerät 1 dagegen wird durch die beschriebenen Bewegungen der angrenzenden Hochregallager 3 bzw. Lagerfächer 32 vorteilhaft nicht beeinflusst, da sein starrer Aufbau aus, zu einer dreidimensionalen Fächermatrix 13 angeordneten Gerüstfächer 12, eine von etwaig einwirkende Bewegungen angrenzender Hochregallager 3 unabhängige, stetige Führung der Kabine(n) 15 darin gewährleistet.

Das Gerätegerüst 11 des Regalbediengeräts 1, insbesondere ein jedes Gerüstfach 12, kann zudem vorzugsweise die elektromotorischen Antriebe 1131 und 1141 umfassen. Durch eine ortsfeste Anordnung der elektromotorischen Antriebe 1131 und 1141 im Gerätegerüst 11, wobei bevorzugt ein jedes Gerüstfach 12 lediglich einen ersten 1131 und zweiten 1141 elektromotorischen Antrieb umfasst, sind für die Anbindung der elektrischen Leistung und der elektrischen Signale, wie bspw. über einen Feldbus, kein Kabelschlepp oder Stromabnehmer erforderlich.

Darüber hinaus kann in einem derartig ausgestalteten Regalbediengerät 1 jede Kabine 15 vorteilhaft unabhängig von anderen Kabinen 15 jedes, insbesondere auch ein benachbartes, Lagerfach 32 erreichen und mehrere Kabinen 15 können unabhängig voneinander und gleichzeitig (also in einem parallelen Betrieb) verfahrbewegt werden, man spricht dabei auch von einem "massiv parallelen Betrieb" eines Hochregallagers 3.

**Fig. 19b** zeigt in einer vergrößerten Darstellung die Kabine 15 aus Fig. 19a kurz vor Erreichen des Endes eines Gerüstfachs 12. In dieser Ausgestaltung läuft die Kabine 15 vorteilhaft auf Führungsrädern 159 mit in erster Horizontalrichtung Z weisenden Drehachsen, welche bevorzugt an den acht Ecken der Kabine 15 angeordnet sind. Vorzugsweise können die Führungsräder 159 von den Zahnstangen 154 und 155, hier für eine zweite Zahnstange 155 dargestellt, zur Gerüstseite hin überdeckt werden, wodurch sich die Länge der Zahnstangen 154 und 155 vorteilhaft über die gesamte jeweilige Seitenlänge der Kabine 15 erstrecken kann. Die Führungsbahnen 115, 116; 117, 118, innerhalb welcher die Verfahrbewegung der Kabine 15, hier in die zweite Horizontalrichtung X, erfolgt, können vorteilhaft, wie dargestellt, als Linearführungsschienen ausgebildet sein, welche vorzugsweise ein zu den Führungsrädern 159 passendes Profil aufweisen.

Ferner ist in Fig. 19b zu sehen, dass die Führungsbahnen 115, 116; 117, 118 vorteilhaft abschnittsweise Unterbrechungen für den Durchtritt der Führungsräder 159 sowie der senkrecht zur jeweiligen Führungsbahn 115, 116; 117, 118 verlaufenden Zahnstange 154 und 155 aufweisen können. Vorzugsweise handelt es sich bei den Unterbrechungen um Schlitze 18 an den jeweiligen Enden eines Gerüstfachs 12, wie sie in Fig. 19b bis d ersichtlich sind.

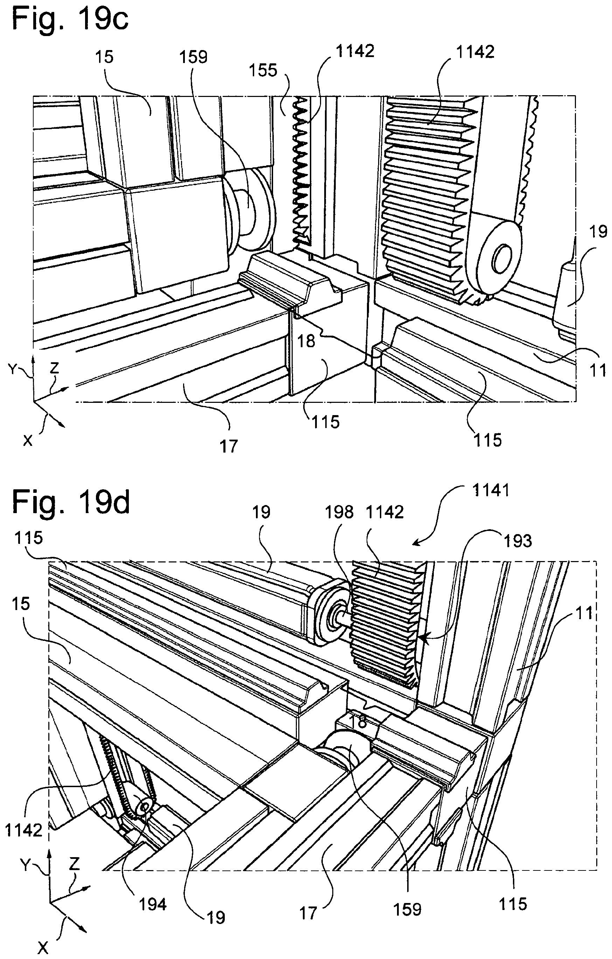

**Fig. 19c** zeigt, wie die Kabine 15 gerade über einen derartigen Schlitz 18 bzw. schlitzartige Unterbrechung hinwegfährt. Es ist zu sehen, dass zu einer ungehinderten Verfahrbewegung in die zweite Horizontalrichtung X die Zähne der zweiten Zahnstange 155, welche in Vertikalrichtung Y verläuft, zum ebenfalls in Vertikalrichtung Y gespannten, zweiten Zahnriemen 1142 synchronisiert sein müssen. Entsprechendes gilt bei einer Verfahrbewegung der Kabine 15 in Vertikalrichtung Y für die dann senkrecht zu dieser Verfahrbewegung angeordneten ersten Zahnstange 154 und den ersten Zahnriemen 1132. Im Bereich der Unterbrechung, hier des Schlitzes 18, wird die Kabine 15 von der Kombination aus Zahnriemen 1132; 1142 und Zahnstange 154; 155 in Position gehalten.

Sofern sich nun die Kabine 15 mit der Zahnstange 155 direkt oberhalb bzw. unterhalb des Schlitzes 18 befindet, kann eine Verfahrbewegung in Vertikalrichtung Y erfolgen, was nachfolgend beschrieben ist.

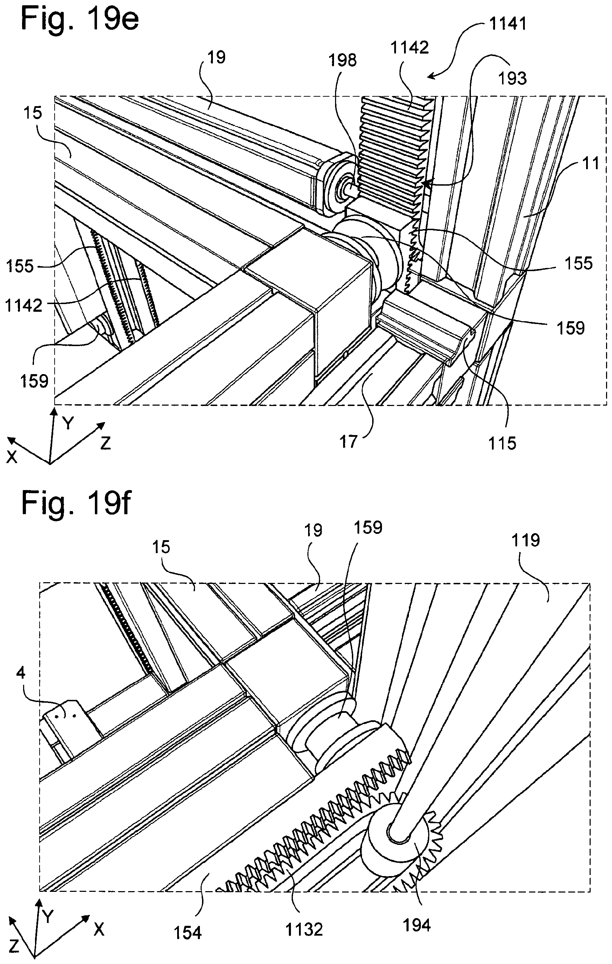

Die **Fig. 19d** und **19e** zeigen einen vergrößerten Ausschnitt der Kabine 15 während der Verfahrbewegung in Vertikalrichtung Y innerhalb eines Regalbediengeräts 1 in einer perspektivischen Aufsicht. **Fig. 19d** zeigt dabei den Zeitpunkt kurz vor dem Durchfahren eines Schlitzes 18 durch die Zahnstange 155 und das Führungsrad 159. **Fig. 19e** zeigt dann das Stadium während des Durchfahrens, wobei der in Vertikalrichtung Y obere Teil der Zahnstange 155 durch den zweiten Zahnriemen 1142 des vertikal folgenden Gerüstfachs 12 aufgenommen ist. Es ist zu sehen, dass die Zahnstange 155 vom zweiten Zahnriemen 1142 des aktuellen Gerüstfachs 12 zu dem zweiten Zahnriemen 1142 des in Vertikalrichtung Y folgenden Gerüstfachs 12 weitergereicht wird, wobei die Stoßstelle der beiden Zahnriemen 1142 von der Zahnstange 155 überfahren wird. Dazu sind die Positionen der Zähne der beiden Zahnriemen 1142 benachbarter Gerüstfächer 12 synchronisierbar (vgl. oben bei Fig. 16). Entsprechendes gilt bei einer Verfahrbewegung der Kabine 15 in zweiter Horizontalrichtung X für die erste Zahnstange 154 und erste Zahnriemen 1132 von einer horizontal benachbarten Gerüstfächem 12.

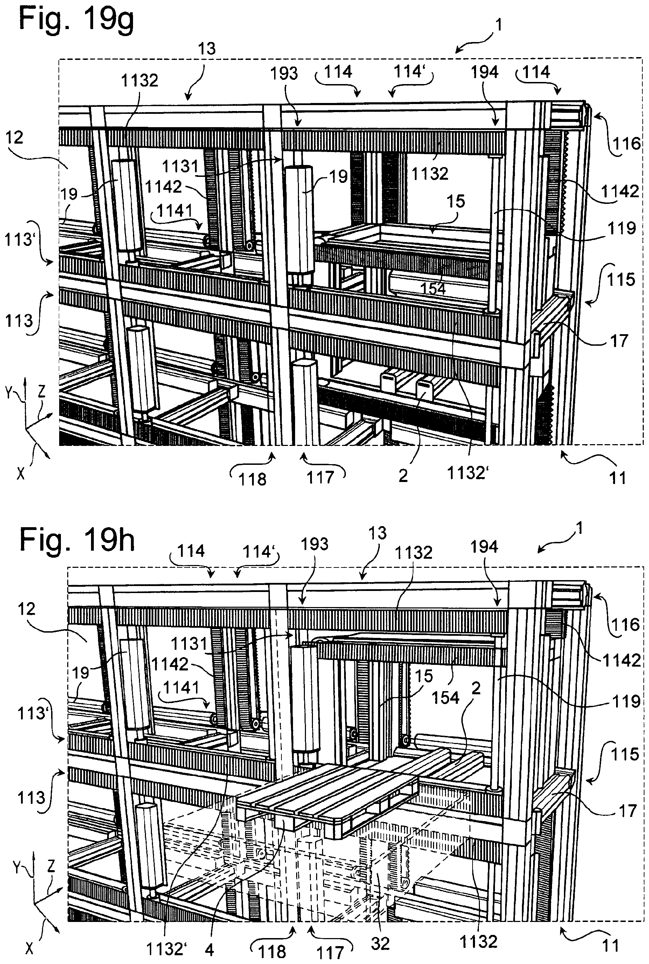

In **Fig. 19f** ist in einer perspektivischen Aufsicht dargestellt, dass zu einer ungehinderten Verfahrbewegung in die Vertikalrichtung Y die Zähne des ersten Zahnriemens 1132, welcher in zweite Horizontalrichtung X gespannt ist, zur ebenfalls zweiter Horizontalrichtung X verlaufenden ersten Zahnstange 154 ausgerichtet sind. Ferner ist in **Fig. 19f** zu sehen, dass bei einer Ausgestaltung mit jeweils zwei in zweiter Horizontalrichtung X gespannten Zahnriemen 1132, und entsprechend zwei an der Kabine 15 parallel zueinander angeordneten Zahnstangen 154, die zweiten Zahnräder 194 von zueinander parallel angeordneten, in die gleiche Richtung verlaufenden Zahnriemen 1132 vorteilhaft über eine Verbindungswelle 119 miteinander in Wirkverbindung stehen können (vgl. hierzu auch **Fig. 19g**).

Fig. 19g zeigt die Verfahrbewegung der Kabine 15 in Vertikalrichtung Y mittels zweier vertikaler 114, 114' Antriebsbahnen, welchen zwei Führungsbahnen 117, 118 gegenüber liegend innerhalb der dreidimensionalen Fächermatrix 13 angeordnet sind.

In **Fig. 19h** ist schließlich erneut eine größerer Ausschnitt des Regalbediengeräts 1 gezeigt, bei dem die Kabine 15 ihre Verfahrbewegung in Vertikalrichtung Y abgeschlossen und ein Lagergut 4, hier beispielhaft eine Europalette, in einem Lagerfach 32 eines Hochregallagers 3 abgesetzt hat, und sich nun wieder in einer vertikalen Abwärtsbewegung befindet. In dieser Darstellung sind innerhalb der Gerüstfächer 12 jeweils linksseitig angeordnete, in Vertikalrichtung Y verlaufende erste, Elektromotoren 19 umfassende, elektromotorische Antriebe 1131 der horizontalen Antriebsbahnen 113, 113' zu sehen. Auf der rechten Seite der Gerüstfächer 12 sind jeweils Verbindungswellen 119 dargestellt, welche die zueinander parallel verlaufenden ersten Zahnriemen 1132 eines Gerüstfaches 12 miteinander in Wirkverbindung bringen. Dadurch braucht ein elektromotorischer Antrieb 1131 kostengünstig mit nur einer Antriebswelle 198 eines Elektromotors 19 zum Antrieb eines ersten Zahnrads 193 ausgestattet sein. Die Bewegungsenergie des Elektromotors 19 kann dann vorteilhaft ohne weiteren Synchronisationsbedarf über zweite Zahnräder 194 an den Enden der Verbindungswelle 119 gekoppelt und vom direkt angetriebenen Zahnriemen 1132 auf den dann indirekt angetriebenen Zahnriemen 1132' übertragen werden. In dieser Ausgestaltung ist dann vorzugsweise das erste Zahnrad 193 des indirekt angetriebenen Zahnriemens 1132' von der Antriebswelle 198 entkoppelt ausgestaltet und lediglich frei drehbar gelagert.

In einer alternativen, hier nicht dargestellten, Ausgestaltung der Erfindung kann der Elektromotor 19 eines elektromotorischen Antriebs 1131, 1141 auch zwei einander gegenüberliegende Antriebswellen 198 zum jeweils direkten Antrieb der beiden richtungsgleich orientierten ersten Zahnriemen 1132 eines Gerüstfachs 12 bezüglich einer Verfahrbewegung in die zweite Horizontalrichtung X bzw. zum jeweils direkten Antrieb der beiden richtungsgleich orientierten zweiten Zahnriemen 1142 eines Gerüstfachs 12 bezüglich einer Verfahrbewegung in die Vertikalrichtung Y aufweisen.

Soweit in einer weiteren (nicht dargestellten) Alternative ein elektromotorischer Antrieb 1131, 1141 zwei Elektromotoren 19 mit zueinander entgegengesetzt ausgerichteten Motorwellen 195 umfasst, besteht bei dieser Alternative Synchronisationsbedarf zwischen den Motor- 195 und/oder Antriebswellen 198, wozu beispielsweise einem jeder Elektromotor 19 vorteilhaft ein Geber zur Erfassung der Winkelpositionen der jeweiligen Motor-195 und/oder Antriebswelle 198 oder ein vergleichbares Mittel zugeordnet ist.

Die Erfindung betrifft ein Regalbediengerät 1, insbesondere für einen parallelen Betrieb eines Hochregallagers 3, mit einem Gerätegerüst 11, das zu einer dreidimensionalen Fächermatrix 13 angeordnete Gerüstfächer 12 aufweist, und mit mindestens einer zur Aufnahme eines Lagerguts 4 dienenden Kabine 15. Die Kabine 15 ist elektromotorisch angetrieben innerhalb der dreidimensionalen Fächermatrix 13 von jedem Gerüstfach 12 aus in eine Vertikalrichtung Y und/oder in eine zweite Horizontalrichtung X verfahrbewegbar. Die Erfindung betrifft ferner ein Betriebsverfahren für ein solches Regalbediengerät 1.

Die vorliegende Erfindung stellt damit erstmals ein Regalbediengerät 1 bereit, das durch die Verfahrbewegbarkeit wenigstens einer Kabine 15 innerhalb eines Gerätegerüsts 11 des Regalbediengeräts 1 in eine Vertikalrichtung Y und/oder in eine zweite Horizontalrichtung X, vorteilhaft einen schnellen Zugriff, sowie durch einen parallelen Betrieb mehrerer Kabinen 15 einen hohen Umschlag von Lagergütern 4 beim Betrieb eines Hochregallagers 3 realisiert.

### Bezugszeichenliste

- 1: Regalbediengerät
11 Gerätegerüst
111 erste horizontale Führungsbahn in X-Richtung
112 erste vertikale Führungsbahn in Y-Richtung
113 horizontale Antriebsbahn in X-Richtung
113' horizontale Antriebsbahn in X-Richtung
1131 erster elektromotorischer Antrieb
1132 erster Zahnriemen
1132' erster Zahnriemen
1133 erste Aussparung
114 vertikale Antriebsbahn in Y-Richtung
114' vertikale Antriebsbahn in Y-Richtung
1141 zweiter elektromotorischer Antrieb
1142 zweiter Zahnriemen
1142' zweiter Zahnriemen
1143 zweite Aussparung
115 zweite horizontale Führungsbahn in X-Richtung
116 dritte horizontale Führungsbahn in X-Richtung
117 zweite vertikale Führungsbahn in Y-Richtung
118 dritte vertikale Führungsbahn in Y-Richtung
119 Verbindungswelle
- 12: Gerüstfach
121 Messsystem
- 13: dreidimensionale Fächermatrix aus Gerüstfächem 12
- 14: Ladefach
- 15: Kabine
151 Kabinenboden
152 erste Führungsstange
153 zweite Führungsstange
154 erste Zahnstange
155 zweite Zahnstange
157 Steg
158 Position der Kabine 15
159 Führungsrad
- 16: elektrische Steckverbindung
161 erster Stecker der Kabine 15
162 zweiter Stecker/Steckdose am Gerüstfach 12
163 Elektrohubmagnet
- 17: Steg
- 18: Schlitz
- 19: Elektromotor
191 Motorachse
193 Zahnrad
194 zweites Zahnrad
195 Motorwelle
196 motorseitiges Zahnrad
197 Zwischenzahnrad
198 Antriebswelle
- 2: Teleskopantrieb
21 Basis
22 erster Schlitten
238 Stromspeicher
27 Tisch
- 3: Hochregallager
31 Lagergerüst mit Lagergut
311 erste Seite
312 zweite Seite
313 Stirnseite
32 Lagerfach
321 Lagerfachboden
322 Strebe
33 Lagergasse
34 Förderband
35 Roboter
36 dreidimensionale Fächermatrix aus Lagerfächern 32
- 4: Lagergut
41 Container
411 Containerkörper
412 Containerkufe
413 Aussparung
- Z: Erste Horizontalrichtung
- X: Zweite Horizontalrichtung
- Y: Vertikalrichtung
- RP1: Lagewert
- RP2: Lagewert
- L: Länge der Basis 21
- A: Abstand

## Patentansprüche

1. Regalbediengerät (1), insbesondere für einen parallelen Betrieb eines Hochregallagers (3),
- mit einem Gerätegerüst (11), das zu einer dreidimensionalen Fächermatrix (13) angeordnete Gerüstfächer (12) aufweist,
- und mit mindestens einer zur Aufnahme eines Lagerguts (4) dienenden Kabine (15), die elektromotorisch angetrieben innerhalb der Fächermatrix (13) von jedem Gerüstfach (12) aus
- in eine Vertikalrichtung (Y)
und/oder
- in eine zweite Horizontalrichtung (X)
verfahrbewegbar ist.

2. Regalbediengerät (1) nach Anspruch 1, **dadurch gekennzeichnet,**
- **dass** die Kabine (15) innerhalb der Fächermatrix (13) von jedem Gerüstfach (12) aus
- in eine Vertikalrichtung (Y)
und
- von wenigstens einer in zweiter Horizontalrichtung (X) nebeneinander angeordneten Reihe von Gerüstfächem (12) aus in eine zweite Horizontalrichtung (X)
verfahrbewegbar ist.

3. Regalbediengerät (1) nach Anspruch 1 oder 2, **dadurch gekennzeichnet,**
- **dass** von Gerätegerüst (11) und Kabine (15) das eine
- wenigstens eine (113), vorzugsweise wenigstens zwei (113, 113'), insbesondere aktiv ausgebildete, in der zweiten Horizontalrichtung (X) verlaufende horizontale Antriebsbahnen, und
- wenigstens eine (114), vorzugsweise wenigstens zwei (114, 114'), insbesondere aktiv ausgebildete, in der Vertikalrichtung (Y) verlaufende vertikale Antriebsbahnen aufweist
und das andere
- eine dazu korrespondierende Anzahl von, insbesondere passiv ausgebildete, in der zweiten Horizontalrichtung (X) verlaufende horizontale Antriebsbahnen (113; 113'), und
- eine ebenfalls korrespondierende Anzahl von, insbesondere passiv ausgebildete, in der Vertikalrichtung (Y) verlaufende vertikale Antriebsbahnen (114; 114') aufweist,
- oder umgekehrt.

4. Regalbediengerät (1) nach Anspruch 3, **dadurch gekennzeichnet,**
- **dass** aktiv ausgebildete Antriebsbahnen (113, 113'; 114, 114'), vorzugsweise ein jeder durch ein Gerüstfach (12) begrenzte Abschnitt der aktiv ausgebildeten Antriebsbahnen (113, 113'; 114, 114'), wenigstens einen elektromotorisch angetriebenen Zahnriemen (1132, 1142) umfassen;
- und **dass** passiv ausgebildete Antriebsbahnen (113, 113'; 114, 114'), vorzugsweise ein jeder an einer Kabine (15) ausgebildete Abschnitt der passiv ausgebildeten Antriebsbahnen (113, 113'; 114, 114'), wenigstens eine Zahnstange (154, 155) zur Wechselwirkung mit wenigstens einem der Zahnriemen (1132, 1142) umfassen.

5. Regalbediengerät (1) nach Anspruch 3 oder 4, **dadurch gekennzeichnet,**
- **dass** eine jede aktiv ausgebildete horizontale Antriebsbahn (113, 113'), vorzugsweise ein jeder durch ein Gerüstfach (12) begrenzte Abschnitt der aktiv ausgebildeten Antriebsbahnen (113, 113'), unmittelbar oder mittelbar mit wenigstens einem ersten elektromotorischen Antrieb (1131) zum Verfahrbewegen der Kabine (15) in die zweite Horizontrichtung (X) wirkverbunden ist,
- und **dass** eine jede aktiv ausgebildete vertikale Antriebsbahn (114, 114'), vorzugsweise ein jeder durch ein Gerüstfach (12) begrenzte Abschnitt der aktiv ausgebildeten Antriebsbahnen (114, 114'), unmittelbar oder mittelbar mit wenigstens einem zweiten elektromotorischen Antrieb (1141) zum Verfahrbewegen der Kabine (15) in die Vertikalrichtung (Y) wirkverbunden ist;
- wobei ein jeder elektromotorische Antrieb (1131, 1141) insbesondere ein Servo-Antrieb ist.

6. Regalbediengerät (1) nach einem oder mehreren der vorherigen Ansprüche, **dadurch gekennzeichnet,**
- **dass** jeder elektromotorische Antrieb (1131, 1141) einen außenverzahnten und vorzugsweise auch innenverzahnten, in die jeweilige Antriebsrichtung (X, Y) gespannten, Zahnriemen (1132, 1142) umfasst;
- wobei bei einer Verfahrbewegung der Kabine (15) in die zweite Horizontalrichtung (X)
- die erste Zahnstange (154) einer passiv ausgebildeten, horizontalen Antriebsbahn (113, 113') mit wenigstens einem ersten Zahnriemen (1132) einer der aktiv ausgebildeten, horizontalen Antriebsbahnen (113, 113') in Eingriff ist und
- zweite Zahnriemen (1142) aktiv ausgebildeter, vertikaler Antriebsbahnen (114, 114') zur zweiten Zahnstange (155) eine horizontalen Querverschiebung zulassend ausgerichtet sind;
- und wobei bei einer Verfahrbewegung der Kabine (15) in die Vertikalrichtung (Y)
- die zweite Zahnstange (155) einer passiv ausgebildeten, vertikalen Antriebsbahn (114, 114') mit wenigstens einem zweiten Zahnriemen (1142) einer der aktiv ausgebildeten, vertikalen Antriebsbahnen (114, 114') in Eingriff ist und
- erste Zahnriemen (1132) aktiv ausgebildeter, horizontaler Antriebsbahnen (113, 113') zur ersten Zahnstange (154) eine vertikale Querverschiebung zulassend ausgerichtet sind.

7. Regalbediengerät (1) nach einem oder mehreren der vorherigen Ansprüche, **dadurch gekennzeichnet,**
- **dass** das Gerätegerüst (11)
- eine erste Anzahl von in der zweiten Horizontalrichtung (X) verlaufenden horizontalen Führungsbahnen (111, 115, 116),
- und eine zweite Anzahl von in der Vertikalrichtung (Y) verlaufende vertikale Führungsbahnen (112, 117, 118)
aufweist,
- wobei die horizontalen Führungsbahnen (111, 115, 116)
- in der Vertikalrichtung (Y) äquidistant übereinander und/oder
- in einer ersten Horizontalrichtung (Z), die senkrecht zur zweiten Horizontalrichtung (X) ist,
zueinander beabstandet angeordnet sind;
- wobei die vertikalen Führungsbahnen (112, 117, 118)
- in der zweiten Horizontalrichtung (X) äquidistant nebeneinander
und/oder
- in einer ersten Horizontalrichtung (Z), die senkrecht zur zweiten Horizontalrichtung (X) ist, zueinander beabstandet
angeordnet sind;
- und **dass** die Gerüstfächer (32) des Gerätegerüsts (11) vorzugsweise zumindest teilweise mittels der horizontalen (111, 115, 116) und vertikalen (112, 117, 118) Führungsbahnen gebildet sind.

8. Regalbediengerät (1) nach einem oder mehreren der vorherigen Ansprüche, **dadurch gekennzeichnet,**
- **dass** die Kabine (15)
- eine in die zweite Horizontalrichtung (X) verlaufende erste Führungsstange (152),
und
- eine in die Vertikalrichtung (Y) verlaufende zweite Führungsstange (153)
umfasst;
- wobei bei einer Verfahrbewegung der Kabine (15) in die zweite Horizontalrichtung (X) die erste Führungsstange (152) mit einer der ersten horizontalen Führungsbahnen (111) wirkverbunden ist;
- und wobei bei einer Verfahrbewegung der Kabine (15) in die Vertikalrichtung (Y) die zweite Führungsstange (153) mit einer der ersten vertikalen Führungsbahnen (112) wirkverbunden ist.

9. Regalbediengerät (1) nach einem oder mehreren der vorherigen der Ansprüche, **dadurch gekennzeichnet,**
- **dass** das Gerätegerüst (11)
- eine Anzahl von in der zweiten Horizontalrichtung (X) verlaufenden und in der Vertikalrichtung (Y) äquidistant übereinander und jeweils zwischen benachbarten ersten horizontalen Führungsbahnen (111) angeordneten horizontalen Antriebsbahnen (113, 113'),
und
- eine Anzahl von in der Vertikalrichtung (Y) verlaufenden und in der zweiten Horizontalrichtung (X) äquidistant nebeneinander und jeweils zwischen benachbarten ersten vertikalen Führungsbahnen (112) angeordneten vertikalen Antriebsbahnen (114, 114')
aufweist.

10. Regalbediengerät (1) nach einem oder mehreren der vorherigen Ansprüche, **dadurch gekennzeichnet,**
- **dass** jeder elektromotorische Antrieb (1131, 1141) einen Linearmotor umfasst,
- wobei passiv ausgebildete Antriebsbahnen (113, 113'; 114, 114') der Kabine (15) das passive Sekundärteil des jeweiligen Linearmotors aufweisen und aktiv ausgebildete Antriebsbahnen (113, 113'; 114, 114') der Gerüstfächer (12) das aktive Primärteil,
- oder wobei aktiv ausgebildete Antriebsbahnen (113, 113'; 114, 114') der Kabine (15) das aktive Primärteil des jeweiligen Linearmotors aufweisen und passiv ausgebildete Antriebsbahnen (113, 113'; 114, 114') das passive Sekundärteil.

11. Regalbediengerät (1) nach einem oder mehreren der vorherigen Ansprüche, **dadurch gekennzeichnet,**
- **dass** die Kabine (15) einen Greifer und/oder einen Teleskopantrieb (2) zum Versetzen eines Lagerguts (4) umfasst.

12. Regalbediengerät (1) nach einem oder mehreren der vorherigen Ansprüche, **dadurch gekennzeichnet,**
- **dass** die Kabine (15) für die Verfahrbewegung innerhalb der Führungsbahnen (111, 115, 116; 112, 117, 118) wenigstens ein Bewegungsmittel, vorzugsweise acht an den Ecken der Kabine (15) angeordnete Führungsräder (159) mit in erster Horizontalrichtung (Z) weisenden Drehachsen, umfasst; wobei die Führungsbahnen (111, 115, 116; 112, 117, 118) bevorzugt als Linearführungsschienen ausgebildet sind, welche ein zu den, bevorzugt durch Führungsräder (159) gebildeten, Bewegungsmitteln passendes Profil aufweisen.

13. Regalbediengerät (1) nach einem oder mehreren der vorherigen Ansprüche, **dadurch gekennzeichnet,**
- **dass** wenigstens ein, vorzugsweise ein jedes, Gerüstfach (12) des Gerätegerüsts (11) ein Messsystem (121) zur Messung eines Absolutwerts der Verfahrbewegung der Kabine (15), umfasst, wobei das Messsystem
- als ein Inkrementalgeber und ein Mittel zur Positionsbestimmung,
und/oder
- als ein Absolutlage-Messsystem
ausgebildet ist.

14. Verfahren zum Betreiben eines Regalbediengeräts (1), insbesondere nach einem oder mehreren der vorherigen Ansprüche,
- mit einem Gerätegerüst (11), das zu einer dreidimensionalen Fächermatrix (13) angeordnete Gerüstfächer (12) aufweist,
- und mit mindestens einer zur Aufnahme eines Lagerguts (4) dienenden Kabine (15), die elektromotorisch angetrieben innerhalb der Fächermatrix (13) von jedem Gerüstfach (12) aus
- in eine Vertikalrichtung (Y)
und/oder
- in eine zweite Horizontalrichtung (X) verfahrbewegt wird.

15. Verfahren zum Betreiben eines Regalbediengeräts (1) nach Anspruch 14, bei dem zum Verfahrbewegen einer Kabine (15) innerhalb eines Gerätegerüsts (11)
- in einem Verfahrensschritt Lagewerte (RP1, RP2) der Zahnriemen (1132, 1142) einander benachbarter Gerüstfächer (12) sowie eine Position (158) der Kabine (15) innerhalb des Gerüstfachs (12), in welchem sich die Kabine (15) aktuell befindet, bestimmt wird; und/oder
- in einem Verfahrensschritt sowohl der Lagewert (RP1) des Zahnriemens (1132, 1142) als auch die Position (158) der Kabine (15) innerhalb des Gerüstfachs (12), in welchem sich die Kabine (15) aktuell befindet, als relativer Nullpunkt definiert wird; und/oder
- in einem Verfahrensschritt, der Lagewert (RP2) des Zahnriemens (1132, 1142) des in Richtung der Verfahrbewegung der Kabine (15) folgenden Gerüstfachs (12) mit dem Lagewert (RP1) des Zahnriemens (1132, 1142) des Gerüstfachs (12), in welchem sich die Kabine (15) aktuell befindet, synchronisiert wird; und/oder
- in einem Verfahrensschritt die Kabine (15) durch Bewegung des Zahnriemens (1132, 1142) um einen Abstand (A) in die Richtung der Verfahrbewegung der Kabine (15) verschoben wird, wobei der Abstand (A) insbesondere der Abstand zwischen den Mittelpunkten zweier, in Richtung der Verfahrbewegung der Kabine (15) benachbarter Gerüstfächer (12) ist; und/oder
- in einem Verfahrensschritt, nach einer erfolgten Übergabe der Kabine (15) in das innerhalb des Gerätegerüsts (11) in Richtung der Verfahrbewegung der Kabine (15) folgende Gerüstfach (12), der Lagewert (RP2) des Zahnriemens (1132, 1142) im Gerüstfach (12), in dem sich die Kabine (15) nach Übergabe befindet, als neuer relativer Nullpunkt definiert wird.

## Claims

1. Storage and retrieval device (1), in particular for a parallel operation of a high-bay warehouse (3),
- having a device frame (11) which has frame compartments (12) that are disposed so as to form a three-dimensional compartment matrix (13),
- and having at least one cab (15) which serves for receiving a stored goods item (4) and which, electromotively driven, within the compartment matrix (13) is movable for repositioning from each frame compartment (12)
- in a vertical direction (Y)
and/or
- in a second horizontal direction (X).

2. Storage and retrieval device (1) according to Claim 1, **characterized in that**
- the cab (15) within the compartment matrix (13) is movable for repositioning from each frame compartment (12)
- in a vertical direction (Y)
and
- from at least one row of frame compartments (12) that in a second horizontal direction (X) are disposed beside one another in a second horizontal direction (X).

3. Storage and retrieval device (1) according to Claim 1 or 2, **characterized in that**
- one of the device frame (11) and the cab (15) has
- at least one (113), preferably at least two (113, 113'), in particular actively configured, horizontal drive tracks that run in the second horizontal direction (X), and
- at least one (114), preferably at least two (114, 114'), in particular actively configured, vertical drive tracks that run in the vertical direction (Y),
and the respective other has
- a corresponding number of, in particular passively configured, horizontal drive tracks (113; 113') that run in the second horizontal direction (X), and
- a likewise corresponding number of, in particular passively configured, vertical drive tracks (114; 114') that run in the vertical direction (Y),
- or vice versa.

4. Storage and retrieval device (1) according to Claim 3, **characterized in that**
- actively configured drive tracks (113, 113'; 114, 114'), preferably each portion of the actively configured drive tracks (113, 113'; 114, 114') that is delimited by a frame compartment (12), comprise at least one electromotively driven timing belt (1132, 1142);
- and passively configured drive tracks (113, 113'; 114, 114'), preferably each portion of the passively configured drive tracks (113, 113'; 114, 114') that is configured on a cab (15), comprise at least one rack (154, 155) for interacting with at least one of the timing belts (1132, 1142).

5. Storage and retrieval device (1) according to Claim 3 or 4, **characterized in that**
- each actively configured horizontal drive track (113, 113'), preferably each portion of the actively configured drive tracks (113, 113') that is delimited by a frame compartment (12), for moving the cab (15) for repositioning in the second horizontal direction (X) is operatively connected directly or indirectly to at least one first electromotive drive (1131),
- and each actively configured vertical drive track (114, 114'), preferably each portion of the actively configured drive tracks (114, 114') that is delimitd by a frame compartment (12), for moving the cab (15) for repositioning in the vertical direction (Y) is operatively connected directly or indirectly to at least one second electromotive drive (1141);
- wherein each electromotive drive (1131, 1141) is in particular a servo drive.

6. Storage and retrieval device (1) according to one or a plurality of the preceding claims, **characterized in that**
- each electromotive drive (1131, 1141) comprises an externally cogged and preferably also internally cogged timing belt (1132, 1142) that is tensioned in the respective drive direction (X, Y);
- wherein in a repositioning movement of the cab (15) in the second horizontal direction (X)
- the first rack (154) of a passively configured, horizontal drive track (113, 113') engages with at least one first timing belt (1132) of one of the actively configured, horizontal drive tracks (113, 113'), and
- second timing belts (1142) of actively configured, vertical drive tracks (114, 114') in relation to the second rack (155) are aligned so as to permit a horizontal transverse displacement;
- and wherein in a repositioning movement of the cab (15) in the vertical direction (Y)
- the second rack (155) of a passively configured, vertical drive track (114, 114') engages with at least one second timing belt (1142) of one of the actively configured, vertical drive tracks (114, 114'), and
- first timing belts (1132) of actively configured, horizontal drive tracks (113, 113') in relation to the first rack (154) are aligned so as to permit a vertical transverse displacement.

7. Storage and retrieval device (1) according to one or a plurality of the preceding claims, **characterized in that**
- the device frame (11) has
- a first number of horizontal guide tracks (111, 115, 116) that run in the second horizontal direction (X),
- and a second number of vertical guide tracks (112, 117, 118) that run in the vertical direction (Y),
- wherein the horizontal guide tracks (111, 115, 116)
- in the vertical direction (Y) are disposed so as to be equidistant on top of one another,
and/or
- in a first horizontal direction (Z) that is perpendicular to the second horizontal direction (X) are disposed so as to be mutually spaced apart;
- wherein the vertical guide tracks (112, 117, 118)
- in the second horizontal direction (X) are disposed so as to be equidistant beside one another,
and/or
- in a first horizontal direction (Z) that is perpendicular to the second horizontal direction (X) are disposed so as to be mutually spaced apart;
- and the frame compartments (32) of the device frame (11) are preferably at least in part formed by means of the horizontal (111, 115, 116) and vertical (112, 117, 118) guide tracks.

8. Storage and retrieval device (1) according to one or a plurality of the preceding claims, **characterized in that**
- the cab (15) comprises
- a first guide rod (152) that runs in the second horizontal direction (X),
and
- a second guide rod (153) that runs in the vertical direction (Y);
- wherein in a repositioning movement of the cab (15) in the second horizontal direction (X) the first guide rod (152) is operatively connected to one of the first horizontal guide tracks (111);
- and wherein in a repositioning movement of the cab (15) in the vertical direction (Y) the second guide rod (153) is operatively connected to one of the first vertical guide tracks (112).

9. Storage and retrieval device (1) according to one or a plurality of the preceding claims, **characterized in that**
- the device frame (11) has
- a number of horizontal drive tracks (113, 113') that run in the second horizontal direction (X) and in the vertical direction (Y) are disposed so as to be equidistant on top of one another and in each case so as to be between neighboring first horizontal guide tracks (111),
and
- a number of vertical drive tracks (114, 114') that run in the vertical direction (Y) and in the second horizontal direction (X) are disposed so as to be equidistant beside one another and in each case so as to be between neighboring first vertical guide tracks (112).

10. Storage and retrieval device (1) according to one or a plurality of the preceding claims, **characterized in that**
- each electromotive drive (1131, 1141) comprises a linear motor,
- wherein passively configured drive tracks (113, 113'; 114, 114') of the cab (15) have the passive secondary part of the respective linear motor, and actively configured drive tracks (113, 113'; 114, 114') of the frame compartments (12) have the active primary part,
- or wherein actively configured drive tracks (113, 113'; 114, 114') of the cab (15) have the active primary part of the respective linear motor, and passively configured drive tracks (113, 113'; 114, 114) have the passive secondary part.

11. Storage and retrieval device (1) according to one or a plurality of the preceding claims, **characterized in that**
- the cab (15) comprises a gripper and/or a telescopic drive (2) for transferring a stored goods item (4).

12. Storage and retrieval device (1) according to one or a plurality of the preceding claims, **characterized in that**
- the cab (15) for the repositioning movement within the guide tracks (111, 115, 116; 112, 117, 118) comprises at least one mobility means, preferably eight guide wheels (159) which are disposed on the corners of the cab (15) and have rotation axes that point in the first horizontal direction (Z); wherein the guide tracks (111, 115, 116; 112, 117, 118) are preferably configured as linear guide rails which have a profile that matches the mobility means, preferably formed by guide wheels (159).

13. Storage and retrieval device (1) according to one or a plurality of the preceding claims, **characterized in that**
- at least one, preferably each, frame compartment (12) of the device frame (11) comprises a measuring system (121) for measuring an absolute value of the repositioning movement of the cab (15), wherein the measuring system is configured
- as an incremental transducer and a means for position determination,
and/or
- as an absolute position measurement system.

14. Method for operating a storage and retrieval device (1), in particular according to one or a plurality of the preceding claims,
- having a device frame (11) which has frame compartments (12) that are disposed so as to form a three-dimensional compartment matrix (13),
- and having at least one cab (15) which serves for receiving a stored goods item (4) and which, electromotively driven, within the compartment matrix (13) is moved for repositioning from each frame compartment (12)
- in a vertical direction (Y)
and/or
- in a second horizontal direction (X).

15. Method for operating a storage and retrieval device (1) according to Claim 14, in which for moving a cab (15) for repositioning within a device frame (11)
- in a method step position values (RP1, RP2) of the timing belts (1132, 1142) of mutually neighboring frame compartments (12) and a position (158) of the cab (15) within the frame compartment (12) in which the cab (15) is currently located are determined; and/or
- in a method step both the position value (RP1) of the timing belt (1132, 1142) and the position (158) of the cab (15) within the frame compartment (12) in which the cab (15) is currently located are defined as the relative zero point; and/or
- in a method step the position value (RP2) of the timing belt (1132, 1142) of the frame compartment (12) that follows in the direction of the repositioning movement of the cab (15) is synchronized with the position value (RP1) of the timing belt (1132, 1142) of the frame compartment (12) in which the cab (15) is currently located; and/or
- in a method step the cab (15) by a movement of the timing belt (1132, 1142) is displaced by a spacing (A) in the direction of the repositioning movement of the cab (15), wherein the spacing (A) is in particular the spacing between the centers of two frame compartments (12) that are neighboring in the direction of the repositioning movement of the cab (15); and/or
- in a method step, upon a transfer of the cab (15) into the frame compartment (12) that within the device frame (11) follows in the direction of the repositioning movement of the cab (15) having been performed, the position value (RP2) of the timing belt (1132, 1142) in the frame compartment (12) in which the cab (15) is located upon having been transferred, is defined as the new relative zero point.

## Revendications

1. Transstockeur (1), en particulier destiné au fonctionnement parallèle d'un magasin à rayonnages en hauteur (3),
- comportant un cadre de transstockeur (11), qui comprend des compartiments de cadre (12) disposés de manière à former une matrice de compartiments (13) tridimensionnelle,
- et comportant au moins une cabine (15) destinée à recevoir un produit stocké (4), laquelle est déplaçable de manière entraînée de façon électromotorisée à l'intérieur de la matrice de compartiments (13) à partir de chaque compartiment de cadre (12)
- dans une direction verticale (Y) et/ou
- dans une deuxième direction horizontale (X).

2. Transstockeur (1) selon la revendication 1, **caractérisé en ce que**
- la cabine (15) est déplaçable à l'intérieur de la matrice de compartiments (13) à partir de chaque compartiment de cadre (12)
- dans une direction verticale (Y)
et
- dans une deuxième direction horizontale (X) à partir d'au moins une rangée de compartiments de cadre (12) disposés à côté les uns des autres dans la deuxième direction horizontale (X).

3. Transstockeur (1) selon la revendication 1 ou 2, **caractérisé en ce que**
- parmi le cadre de transstockeur (11) et la cabine (15) l'un
- comprend au moins une (113), de préférence au moins deux (113, 113') voies d'entraînement horizontales réalisées en particulier activement et s'étendant dans la deuxième direction horizontale (X), et
- comprend au moins une (114), de préférence au moins deux (114, 114') voies d'entraînement verticales réalisées en particulier activement et s'étendant dans la direction verticale (Y)
et l'autre
- comprend un nombre, correspondant à celles-ci, de voies d'entraînement (113 ; 113') réalisées en particulier passivement et s'étendant dans la deuxième direction horizontale (X), et
- comprend un nombre également correspondant de voies d'entraînement (114 ; 114') réalisées en particulier passivement et s'étendant dans la direction verticale (Y),
- ou inversement.

4. Transstockeur (1) selon la revendication 3, **caractérisé en ce que**
- des voies d'entraînement (113, 113' ; 114, 114') réalisées activement, de préférence chaque partie des voies d'entraînement (113, 113' ; 114, 114') réalisées activement limitée par un compartiment de cadre (12), comportent au moins une courroie dentée (1132, 1142) entraînée de façon électromotorisée ;
- et des voies d'entraînement (113, 113' ; 114, 114') réalisées passivement, de préférence chaque partie des voies d'entraînement (113, 113' ; 114, 114') réalisées passivement réalisée de préférence au niveau d'une cabine (15), comportent au moins une crémaillère (154, 155) destinée à interagir avec au moins l'une des courroies (1132, 1142).

5. Transstockeur (1) selon la revendication 3 ou 4, **caractérisé en ce que**
- chaque voie d'entraînement (113, 113') horizontale réalisée activement, de préférence chaque partie des voies d'entraînement (113, 113') réalisées activement limitée par un compartiment de cadre (12), est reliée fonctionnellement directement ou indirectement à au moins un premier entraînement électromotorisé (1131) pour le déplacement de la cabine (15) dans la deuxième direction horizontale (X),
- et **en ce que** chaque voie d'entraînement (114, 114') verticale réalisée activement, de préférence chaque partie des voies d'entraînement (114, 114') réalisées activement limitée par un compartiment de cadre (12), est reliée fonctionnellement directement ou indirectement à au moins un deuxième entraînement électromotorisé (1141) pour le déplacement de la cabine (15) dans la direction verticale (Y) ;
- chaque entraînement électromotorisé (1131, 1141) étant en particulier un servo-entraînement.

6. Transstockeur (1) selon l'une ou plusieurs des revendications précédentes, **caractérisé en ce que**
- chaque entraînement électromotorisé (1131, 1141) comporte une courroie dentée (1132, 1142) à denture extérieure et de préférence également à denture intérieure, tendue dans la direction d'entraînement (X, Y) respective ;
- lors d'un déplacement de la cabine (15) dans la deuxième direction horizontale (X)
- la première crémaillère (154) d'une voie d'entraînement (113, 113') horizontale réalisée passivement étant en prise avec au moins une première courroie dentée (1132) de l'une des voies d'entraînement (113, 113') horizontales réalisées activement et
- des deuxièmes courroies dentées (1142) de voies d'entraînement (114, 114') verticales réalisées activement étant orientées par rapport à la deuxième crémaillère (155) de manière à autoriser un décalage transversal horizontal ;
- et lors d'un déplacement de la cabine (15) dans la direction verticale (Y)
- la deuxième crémaillère (155) d'une voie d'entraînement (114, 114') verticale réalisée passivement étant en prise avec au moins une deuxième courroie dentée (1142) de l'une des voies d'entraînement (114, 114') verticales réalisées activement et
- des premières courroies dentées (1132) de voies d'entraînement (113, 113') horizontales réalisées activement étant orientées par rapport à la première crémaillère (154) de manière à autoriser un décalage transversal vertical.

7. Transstockeur (1) selon l'une ou plusieurs des revendications précédentes, **caractérisé en ce que**
- le cadre de transstockeur (11) comprend
- un premier nombre de voies de guidage (111, 115, 116) horizontales s'étendant dans la deuxième direction horizontale (X),
- et un deuxième nombre de voies de guidage (112, 117, 118) verticales s'étendant dans la direction verticale (Y),
- les voies de guidage (111, 115, 116) horizontales étant disposées de manière espacée les unes des autres
- les unes au-dessus des autres de manière équidistante dans la direction verticale (Y) et/ou
- dans une première direction horizontale (Z) qui est perpendiculaire à la deuxième direction horizontale (X) ;
- les voies de guidage (112, 117, 118) verticales étant disposées de manière espacée les unes des autres
- les unes à côté des autres de manière équidistante dans la deuxième direction horizontale (X) et/ou
- dans une première direction horizontale (Z) qui est perpendiculaire à la deuxième direction horizontale (X) ;
- et **en ce que** les compartiments de cadre (32) du cadre de transstockeur (11) sont formés de préférence au moins partiellement au moyen des voies de guidage horizontales (111, 115, 116) et verticales (112, 117, 118) .

8. Transstockeur (1) selon l'une ou plusieurs des revendications précédentes, **caractérisé en ce que**
- la cabine (15) comporte
- une première tige de guidage (152) s'étendant dans la deuxième direction horizontale (X),
et
- une deuxième tige de guidage (153) s'étendant dans la direction verticale (Y) ;
- la première tige de guidage (152) étant reliée fonctionnellement à l'une des premières voies de guidage (111) horizontales lors d'un déplacement de la cabine (15) dans la deuxième direction horizontale (X) ;
- et la deuxième tige de guidage (153) étant reliée fonctionnellement à l'une des premières voies de guidage (112) verticales lors d'un déplacement de la cabine (15) dans la direction verticale (Y).

9. Transstockeur (1) selon l'une ou plusieurs des revendications précédentes, **caractérisé en ce que**
- le cadre de transstockeur (11) comprend
- un nombre de voies d'entraînement (113, 113') horizontales s'étendant dans la deuxième direction horizontale (X) et disposées les unes au-dessus des autres de manière équidistante dans la direction verticale (Y) et respectivement entre des premières voies de guidage (111) horizontales adjacentes,
et
- un nombre de voies d'entraînement (114, 114') verticales s'étendant dans la direction verticale (Y) et disposées les unes à côté des autres de manière équidistante dans la deuxième direction horizontale (X) et respectivement entre des premières voies de guidage (112) verticales adjacentes.

10. Transstockeur (1) selon l'une ou plusieurs des revendications précédentes, **caractérisé en ce que**
- chaque entraînement électromotorisé (1131, 1141) comporte un moteur linéaire,
- des voies d'entraînement (113, 113' ; 114, 114'), réalisées passivement, de la cabine (15) comportant la partie secondaire passive du moteur linéaire respectif et des voies d'entraînement (113, 113' ; 114, 114'), réalisées activement, des compartiments de cadre (12) comprenant la partie primaire active,
- ou des voies d'entraînement (113, 113' ; 114, 114'), réalisées activement, de la cabine (15) comprenant la partie primaire active du moteur linéaire respectif et des voies d'entraînement (113, 113' ; 114, 114') réalisées passivement comprenant la partie secondaire passive.

11. Transstockeur (1) selon l'une ou plusieurs des revendications précédentes, **caractérisé en ce que**
- la cabine (15) comporte un dispositif de préhension et/ou un entraînement télescopique (2) pour le changement de place d'un produit stocké (4).

12. Transstockeur (1) selon l'une ou plusieurs des revendications précédentes, **caractérisé en ce que**
- la cabine (15) comporte pour le déplacement à l'intérieur des voies de guidage (111, 115, 116 ; 112, 117, 118) au moins un moyen de déplacement, de préférence huit roues de guidage (159) disposées aux coins de la cabine (15) et présentant des axes de rotation orientés dans la première direction horizontale (Z) ; les voies de guidage (111, 115, 116 ; 112, 117, 118) étant réalisées de préférence sous forme de rails de guidage linéaires, lesquels présentent un profil adapté aux moyens de déplacement formés de préférence par des roues de guidage (159) .

13. Transstockeur (1) selon l'une ou plusieurs des revendications précédentes, **caractérisé en ce que**
- au moins un, de préférence chaque compartiment de cadre (12) du cadre de transstockeur (11) comporte un système de mesure (121) servant à la mesure d'une valeur absolue du déplacement de la cabine (15), le système de mesure étant réalisé
- sous la forme d'un codeur incrémental et d'un moyen de détermination de la position,
et/ou
- sous la forme d'un système de mesure de position absolue.

14. Procédé de fonctionnement d'un transstockeur (1), en particulier selon l'une ou plusieurs des revendications précédentes,
- comportant un cadre de transstockeur (11), qui comprend des compartiments de cadre (12) disposés de manière à former une matrice de compartiments (13) tridimensionnelle,
- et comportant au moins une cabine (15) destinée à recevoir un produit stocké (4), laquelle est déplaçable de manière entraînée de façon électromotorisée à l'intérieur de la matrice de compartiments (13) à partir de chaque compartiment de cadre (12)
- dans une direction verticale (Y) et/ou
- dans une deuxième direction horizontale (X).

15. Procédé de fonctionnement d'un transstockeur (1) selon la revendication 14,
dans lequel pour le déplacement d'une cabine (15) à l'intérieur d'un cadre de transstockeur (11)
- dans une étape de procédé, des valeurs de position (RP1, RP2) des courroies dentées (1132, 1142) de compartiments de cadre (12) adjacents l'un à l'autre ainsi qu'une position (158) de la cabine (15) à l'intérieur du compartiment de cadre (12), dans lequel la cabine (15) se trouve actuellement, sont déterminées ;
et/ou
- dans une étape de procédé, à la fois la valeur de position (RP1) de la courroie dentée (1132, 1142) et la position (158) de la cabine (15) à l'intérieur du compartiment de cadre (12), dans lequel la cabine (15) se trouve actuellement, sont définies comme point zéro relatif ; et/ou
- dans une étape de procédé, la valeur de position (RP2) de la courroie dentée (1132, 1142) du compartiment de cadre (12) suivant dans la direction du déplacement de la cabine (15) est synchronisée avec la valeur de position (RP1) de la courroie dentée (1132, 1142) du compartiment de cadre (12), dans lequel la cabine (15) se trouve actuellement ; et/ou
- dans une étape de procédé, la cabine (15) est décalée par déplacement de la courroie dentée (1132, 1142) d'une distance (A) dans la direction du déplacement de la cabine (15), la distance (A) étant en particulier la distance entre les centres de deux compartiments de cadre (12) adjacents dans la direction du déplacement de la cabine (15) ; et/ou
- dans une étape de procédé, une fois un transfert de la cabine (15) dans le compartiment de cadre (12) suivant à l'intérieur du cadre de transstockeur (11) dans la direction du déplacement de la cabine (15) effectué, la valeur de position (RP2) de la courroie dentée (1132, 1142) dans le compartiment de cadre (12), dans lequel la cabine (15) se trouve après le transfert, est définie comme nouveau point zéro relatif.
